# EUROPEAN PATENT APPLICATION

(11) **EP 4 738 212 A1**
(43) Date of publication of application: **06.05.2026**
(21) Application number: 25212443.3
(22) Date of filing: 30.10.2025
(51) Int. Cl.: G06Q 10/047, G07C 9/38

(54) **DYNAMIC ACCESS CONTROL AND INTRUSION DETECTION FOR SECURITY SYSTEMS**

(30) Priority: 31.10.2024 US 202463714522 P
(71) Applicant: Genetec Inc., St-Laurent, Québec H4S 2A4 (CA)
(72) Inventor: RIOUX, Frederick, St-Laurent, Québec, H4S 2A4 (CA); LENOT, David, St-Laurent, Québec, H4S 2A4 (CA); RACZ, Pierre, St-Laurent, Québec, H4S 2A4 (CA)
(74) Representative: Kramer Barske Schmidtchen Patentanwälte PartG mbB

(57) **Abstract**

A security system managing access to a site. The security system comprising a computing system adapted to obtain an augmented topology map of the site, the augmented topology map defining a plurality of spaces included in the site; identify respective space attribute values for each space included in the plurality of spaces; receive a request for an object to access a first space included in the plurality of spaces; determine a route from a starting location of the object to the first space based in part on the respective space attribute values identified for each space included in the plurality of spaces and an identity of the object, the route including at least one monitoring device disposed between the starting location and the first space; and permit the object to traverse the route monitored by the at least one monitoring device based in part on the identity of the object.

## Description

### FIELD

The present teachings relate generally to security systems and, more particularly, to dynamic access control and intrusion detection for security systems.

### BACKGROUND

Security systems often include access control devices that are used to restrict and grant access to particular areas within a site (e.g., a building, a premises including one or more other buildings, a campus, a manufacturing facility, opens spaces such as freeways or the like, and/or some other area). For example, access control devices such as doors, electronic door locks, gates, and/or other devices can be used to restrict persons from accessing particular rooms, hallways, or other spaces within a building. However, configuring access control devices and managing which users are able to access the spaces restricted by access control devices can be a painstaking, difficult process.

For example, using conventional approaches, operators of a security system (e.g., security officers, IT personnel, etc.) often manually assign access permissions to users, including employees working at a site and visitors visiting a site, for each respective space included in the site. At least one drawback to these conventional approaches for assigning access permission to users is that for instances in which there are many employees (e.g., hundreds, thousands, etc.) working at a site that includes many different spaces restricted by access control devices (e.g., hundreds or even thousands of rooms, hallways, laboratories, etc.), manually assigning access permissions for each user is very time consuming and prone to operator error, and rarely is the assignment done at a granular level, which might reduce security risks.

At least another drawback to these conventional approaches for manually assigning access permissions to users is that it can be difficult to update the access permissions of respective users in response to the occurrence of anomalous events (e.g., fires, intrusions, etc.). For example, when an anomalous event occurs within and/or near a particular space in a site, it may be necessary to reassign access permissions to users nearby the anomalous event so that the users can safely transit through the site away from the anomalous event. However, the amount of time required to determine which users are located near the anomalous event, whether those users located near the anomalous event need updated access permissions to safely escape the area, and finally manually reassign access permissions to those in need makes it impractical for operators of the security system to quickly adjust access permissions in response to the occurrence of an anomalous event.

Moreover, as mentioned above, manual assignment of access permissions to many users for many respective spaces is prone to human error. In that regard, for instances in which users have mistakenly been granted access permissions to spaces within the site that the users should not be allowed to access, it can be difficult for operators of the security system to identify situations in which users are located within spaces they should not be.

In addition to manually assigning permissions to users, with these conventional approaches, operators of a security system (e.g., security officers, IT personnel, etc.) may also have to manually assign attribute values for each respective space included in the site. Similar to the drawbacks of manually assigning permissions to users, at least one drawback to manually assigning attributes to each space included in the site is that for instances in which there are many different spaces (e.g., tens, hundreds, or even thousands) in the site, manually assigning attributes (e.g., a max capacity attribute, a restricted object attribute (for example, no guns allowed in a space), etc.) for each space is very time consuming and prone to operator error.

Therefore, it would be beneficial to have alternative systems and methods for dynamic access control and intrusion detection in security systems.

### SUMMARY

The needs set forth herein as well as further and other needs and advantages are addressed by the present embodiments, which illustrate solutions and advantages described below.

The present teachings relate to dynamic access control and intrusion detection for a security system. In particular, the present teachings relate to dynamically controlling access of an object to respective spaces in a site based on changing attribute values of the object and the spaces within the site. Moreover, with the present teachings, instances in which an object is located within a space that the object is not permitted to exist can be efficiently and/or automatically detected based in part on the changing attributes of the object, the changing attributes of the space, and security data generated by one or more security devices within the security system.

At least one technical advantage of the present teachings relative to existing solutions is that, with the present teachings, access permissions for a particular object, such as a person, can be automatically assigned and/or updated based on present values of attributes associated with the particular object and/or the spaces within the site. In that regard, the amount of time required to assign and/or adjust access permissions to a particular object for each space in a site is greatly reduced. At least another technical advantage of the present teachings is that policies governing access to a site that might not have been enforceable with existing solutions, such as preventing access to the site for persons carrying firearms or preventing access to spaces with high carbon monoxide levels, can be enforced using access permissions themselves, rather than separate systems, which might be more prone to failure. At least another technical advantage of the present teachings relative to existing solutions is that, with the present teachings, scenarios in which an object exists in a space that the object is not permitted to exist can be automatically detected.

In one independent aspect, a security system managing access to a site comprises a computing system. The computing system is adapted to obtain an augmented topology map of the site, the augmented topology map defining a plurality of spaces included in the site, and identify respective space attribute values for each space included in the plurality of spaces. The computing system is further adapted to receive a request for an object to access a first space included in the plurality of spaces and determine a route from a starting location of the object to the first space based in part on the respective space attribute values identified for each space included in the plurality of spaces and an identity of the object, the route including at least one monitoring device disposed between the starting location and the first space. The computing system is further adapted to permit the object to traverse the route monitored by the at least one monitoring device based in part on the identity of the object.

In another independent aspect, a method includes obtaining an augmented topology map of a site, the augmented topology map defining a plurality of spaces in the site, and identifying respective space attribute values for each space included in the plurality of spaces. The method further includes receiving a request for an object to access a first space included in the plurality of spaces and determining a route from a starting location of the object to the first space based in part on the respective space attribute values identified for each space included in the plurality of spaces and an identity of the object, the route including at least one security device disposed between the starting location and the first space. The method further includes permitting the object to traverse the route monitored by the at least one security device based in part on the identity of the object.

In another independent aspect, a security system managing access to a site comprises a plurality of access control devices adapted to restrict access to a plurality of spaces included in the site and a computing system including one or more processors in electronic communication with the plurality of access control devices via a network. The computing system is adapted to obtain an augmented topology map, the augmented topology map defining the plurality of spaces in the site, receive a request for an object to access a first space included in the plurality of spaces, and determine an object attribute value associated with the object. The computing system is further adapted to identify, based in part on the augmented topology map and the object attribute value, a second space included in the plurality of spaces through which the object is allowed to transit, the second space disposed between the first space and a starting location of the object, and enable, via at least one access control device included in the plurality of access control devices, the object to enter the second space.

In another independent aspect, a method includes obtaining an augmented topology map, the augmented topology map defining a plurality of spaces included in a site, receiving a request for an object to access a first space included in the plurality of spaces, determining an object attribute value associated with the object, identifying, based in part on the augmented topology map and the object attribute value, a second space included in the plurality of spaces through which the object is allowed to transit, the second space disposed between the first space and a starting location of the object, and enabling, via at least one access control device included in the plurality of access control devices, the object to enter the second space.

In another independent aspect, a security system managing access to a site that includes a plurality of spaces comprises at least one security device adapted to generate security data associated with a first space included in the plurality of spaces and a computing system including one or more processors in electronic communication with the at least one security device via a network. The computing system is adapted to obtain an augmented topology map of the site, the augmented topology map comprising a data structure that defines the plurality of spaces in the site, and implement a security model associated with the site, the security model comprising a data structure that defines space attribute values associated with each space in the plurality of spaces, a plurality of objects existing within the plurality of spaces, and object attribute values assigned to each object included in the plurality of objects. The computing system is further adapted to receive the security data from the at least one security device, the security data indicative of a first object included in the plurality of objects existing in the first space included in the plurality of spaces, update, based on the security data, at least one of a first object attribute value associated with the first object and a first space attribute value associated with the first space; determine, based in part on the at least one of the first object attribute value and the first space attribute value, a permission of the first object to exist in the first space, and responsive to determining a negative permission for the first object to exist in the first space, the computing system adapted to update an attribute value associated with the first object to indicate an anomalous presence of the first object.

In another independent aspect, a security system managing access to a site that includes a plurality of spaces comprising at least one security device adapted to generate security data associated with a first space included in the plurality of spaces and a computing system including one or more processors in electronic communication with the at least one security device via a network. The computing system is adapted to obtain an augmented topology map of the site, the augmented topology map comprising a data structure that defines the plurality of spaces in the site, implement a security model comprising a data structure that defines space attribute values assigned to each space in the plurality of spaces, a plurality of objects existing within the plurality of spaces, and object attribute values assigned to each object included in the plurality of objects, and receive the security data from the at least one security device, the security data indicative of a first object included in the plurality of objects existing in a first space included in the plurality of spaces. The computing system is further adapted to update, based on the security data, at least one of a first object attribute value associated with the first object and a first space attribute value associated with the first space, determine a confidence score for the first object attribute value based in part on the security data security model, and determine whether the confidence score in compliance with a first policy. The computing system is further adapted to determine whether the first object attribute value is in compliance with a second policy associated with the first space and, responsive in part to determining that at least one of the confidence score is not in compliance with the first policy or that the first object attribute value is not in compliance with the second policy associated with the first space, the determine a negative permission for the first object to exist in the first space and issue an alert to an operator.

Embodiments of the system and method are described in detail below and are also part of the present teachings.

For a better understanding of the present embodiments, together with other and further aspects thereof, reference is made to the accompanying drawings and detailed description, and its scope will be pointed out in the appended claims.

### BRIEF DESCRIPTION OF THE DRAWINGS

FIG. 1 is an illustration of one embodiment of a security system, according to the present teachings.
FIG. 2 is a flow diagram of method steps for managing access control with a security system, according to the present teachings.
FIG. 3 is a flow diagram of method steps for managing access control with a security system, according to the present teachings.
FIG. 4 is a flow diagram of method steps for intrusion detection with a security system, according to the present teachings.
FIG. 5 is a flow diagram of method steps for intrusion detection with a security system, according to the present teachings.
FIG. 6 is a block diagram of a security device that may be implemented in conjunction with a security system, according to the present teachings.
FIG. 7 is a block diagram of a security system computing device that may be implemented in conjunction with a security system, according to the present teachings.
FIG. 8 is a block diagram of a security system server that may be implemented in conjunction with a security system, according to the present teachings.
FIG. 9A illustrates an example visual representation of an augmented topology map of a site at which the security system of FIG. 1 is implemented, according to the present teachings.
FIGS. 9B-9H illustrate example visual representation of the augmented topology map of FIG. 9A at various points in time during operation of the security system of FIG. 1, according to the present teachings.
FIG. 10 illustrates an example flow diagram of a process for managing access control and intrusion detection with a security system, according to the present teachings.
FIG. 11 is a flow diagram of method steps for managing access control with a security system, according to the present teachings.

### DETAILED DESCRIPTION

The present teachings are described more fully hereinafter with reference to the accompanying drawings, in which the present embodiments are shown. The following description is presented for illustrative purposes only and the present teachings should not be limited to these embodiments. Any computer configuration and architecture satisfying the speed and interface requirements herein described may be suitable for implementing the system and method of the present embodiments.

In compliance with the statute, the present teachings have been described in language more or less specific as to structural and methodical features. It is to be understood, however, that the present teachings are not limited to the specific features shown and described, since the systems and methods herein disclosed comprise preferred forms of putting the present teachings into effect.

For purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail.

Generally, all terms used in the claims are to be interpreted according to their ordinary meaning in the technical field, unless explicitly defined otherwise herein. All references to a/an/the element, apparatus, component, means, step, etc. are to be interpreted openly as referring to at least one instance of the element, apparatus, component, step, etc., unless explicitly stated otherwise. The steps of any method disclosed herein do not have to be performed in the exact order disclosed, unless explicitly stated. The use of "first", "second," etc. for different features/components of the present disclosure are only intended to distinguish the features/components from other similar features/components and not to impart any order or hierarchy to the features/components.

To aid the Patent Office and any readers of a patent issued on this application in interpreting the claims appended hereto, it is noted that none of the appended claims or claim elements are intended to invoke 35 U.S.C. 112(f) unless the words "means for" or "step for" are explicitly used in the particular claim.

Recitations of numerical ranges by endpoints include all numbers within that range (e.g., 1 to 5 includes 1, 1.5, 2, 2.75, 3, 3.80, 4, 5, etc.). Where a range of values is "greater than", "less than", etc., of a particular value, that value is included within the range.

Any direction referred to herein, such as "top," "bottom," "left," "right," "upper," "lower," "above," below," and other directions and orientations are described herein for clarity in reference to the figures and are not to be limiting of an actual device or system or use of the device or system. Many of the devices, articles, or systems described herein may be used in a number of directions and orientations.

Any citation to a reference in this disclosure or during the prosecution thereof is made out of an abundance of caution. No citation (whether in an Information Disclosure Statement or otherwise) should be construed as an admission that the cited reference qualifies as prior art or comes from an area that is analogous or directly applicable to the present teachings.

A "computing system" may provide functionality for the present teachings. The computing system may include software executing on computer readable media that may be logically (but not necessarily physically) identified for particular functionality (e.g., functional modules). The computing system may include any number of computers/processors, which may communicate with each other over a network. The computing system may be in electronic communication with a datastore (e.g., database) that stores control and data information. Forms of computer readable media include, but are not limited to, disks, hard drives, random access memory, programmable read only memory, or any other medium from which a computer can read.

As described herein, a computing system can be adapted to execute a security model to accomplish various tasks such as but not limited to obtaining security data from the security devices and/or deducing security data based on inputs from security devices, updating the security model, evaluating the policies to make decisions regarding requests for access control and queries regarding intrusion, and reconfiguring the security devices.

### SYSTEM OVERVIEW

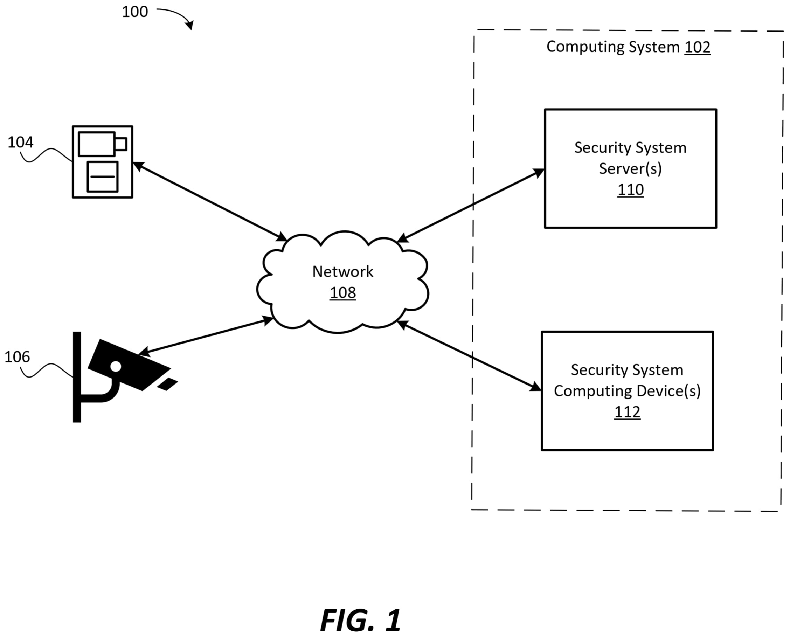

Referring now to FIG. 1, shown is one embodiment of a security system 100 according to the present teachings. One or more elements of the security system 100 are implemented and/or installed at a site. The site may be, for example, a building, a premises including one or more other buildings, a campus, a manufacturing facility, and/or some other area and/or location.

As shown, the security system 100 includes a computing system 102 that is in electronic communication with a plurality of access control devices 104 and security devices 106 via a network 108. The computing system 102 may include any number of computers/processors, which may communicate with each other over the network 108 and rely on distributed computing resources. In some examples, the computing system 102 may be in the form of one or more servers.

In the illustrated example of FIG. 1, the computing system 102 includes one or more security system servers 110 and one or more security system computing devices112, each of which are connected via the network 108. In the following description, actions performed by security system computing server(s) 110 and/or security system computing device(s) 112 may be collectively referred to as being performed by the computing system 102. Moreover, in some examples, actions described herein as being performed by a security system server 110 may also and/or alternatively be performed by a security system computing device 112. Likewise, in some examples, actions described herein as being performed by a security system computing device 112 may also and/or alternatively be performed by a security system server 110.

As described herein, an access control device 104 is a physical device which can be actuated in response to an access control decision to permit or prevent an object from entering or leaving a space. In that regard, access control devices 104 described herein are adapted to restrict the access of objects to spaces within a site. In the illustrated example of FIG. 1, the access control device(s) 104 are illustrated as an electronic door lock. However, the security system 100 can include various types of access control devices other than electronic door locks. For example, the access control devices 104 can be implemented as one or more of doors, gates, pneumatic door locks, badge readers, turnstile gates, and/or any other suitable type of access control device. In the following description, the access control devices 104 may be collectively referred to as an access control device 104.

In some examples, an access control device 104 can include one or more indicators that can be selectively activated to indicate whether an object is permitted to transit past the access control device. For example, an access control device 104 can include a visual indicator, such as one or more lights, that can be controlled to flash or illuminate in a first pattern and/or color (e.g., green) to indicate that an object is permitted to transit the access control device 104. As another example, the visual indicator can be controlled to flash or illuminate in a second pattern and/or a second color (e.g., red) to indicate that an object is not permitted to transit the access control device 104. In some examples, an access control device 104 can include one or more audio indicators (e.g., speakers) that can be controlled to emit one or more sounds that indicate whether an object is permitted to transit the access control device 104. In some examples, the computing system 102 can control the indicators of an access control device to provide an indication as to whether an object is permitted to transit (i) as the object approaches the access control device 104, as the object 104 moves past the access control device 104, and/or in response to detecting a deliberate attempt (e.g., badge swipe, facial scan, thumbprint scan, entrance of credentials, etc.) by the object to transit the access control device 104.

As further described herein, a security device 106 is any kind of sensor which, by observing characteristics of its environment, generates data representative of the environment. In that regard, security devices 106 described herein are adapted to generate security data associated with the spaces monitored by the security devices 106 and/or the objects existing within the spaces monitored by the security devices 106. In the illustrated example of FIG. 1, the security devices 106 are shown as surveillance cameras that generate video content. However, the security system 100 can include various types of security devices other than surveillance cameras. For example, the security devices 106 can be implemented as one or more of surveillance cameras, motion sensors, alarms, person counters, badge readers, or other suitable devices for reading someone's credentials, facial and/or retinal scanners, thumbprint scanners, and/or any other suitable type of security device. In the following description, the security devices 106 be collectively referred to as a security device 106. In some examples, the security devices 106 can include and/or be implemented using one or more access control devices 104.

The network 108 can be, for example, a combination of one or more of a wide area network (WAN) (e.g., the Internet, a TCP/IP based network, a cellular network, such as, for example, a Global System for Mobile Communications [GSM] network, a General Packet Radio Services [GPRS] network, a Code Division Multiple Access [CDMA] network, an Evolution-Data Optimized [EV-DO] network, an Enhanced Data Rates for GSM Evolution [EDGE] network, a 3 GSM network, a 4GSM network, a Digital Enhanced Cordless Telecommunications [DECT] network, a Digital AMPS [IS-136/TDMA] network, or an Integrated Digital Enhanced Network [iDEN] network, etc.), a local area network (LAN), a neighborhood area network (NAN), a home area network (HAN), and/or a personal area network (PAN) employing any of a variety of communications protocols, such as Wi-Fi, Bluetooth, ZigBee, etc. In some examples, one or more access control devices 104 and/or security device 106 can be in direct electronic communication (e.g., via a wired communication) with a security system computing device 112 without use of the network 108.

As will be described in more detail herein, during operation of the security system 100, the computing system 102 is adapted to implement a security model and a physical security management software (PSMS) for dynamically managing access control to the site at which the security system 100 is implemented and/or installed. The security model is the software which represents the spaces within a site, the objects within those spaces, respective attributes of the objects and spaces, and the relationships between the spaces and objects. In some cases, the security model will operate a "digital twin" which is continuously updated in real-time using security data generated by one or more security devices 106.

In some examples, in implementing the security model, the computing system 102 obtains and manages an augmented topology map of the site at which the security system 100 is implemented and/or installed. An augmented topology map, which may also be referred to as an augmented topological map, is a data structure used to represent a physical location (e.g., the site at which the security system 100 is implemented), separate spaces within the physical location, the attributes of those spaces, the interconnection between those spaces (which may have their own attributes), and, in some cases, the distribution and arrangement of access control and security devices within those spaces. In some cases, augmented topology map can also be used to represent objects positioned within the spaces of the physical location and the attributes of the objects. In some cases, the augmented topology map can be represented as an edge-node graph, in which spaces would be nodes, the interconnections between spaces would be edges, and both the nodes and the edges can have their own attributes.

Access control refers to the security practice(s) focused on deciding whether an object is permitted to enter or leave a space based on information relating to the object and to the space. In some examples, access control may be, for example, enforced by policies of the security system 100. A policy, as used herein, refers to a set of rules and conditions which represents, in logical form, the governance decisions of the entity which is responsible for the physical location and/or site at which the security system 100 is implemented. Policies exist for evaluation in a particular context, in light of the available information.

The PSMS, for its part, is responsible for making access control and/or intrusion decisions using the information stored in the security model and based on the policies currently in effect. In some examples, the PSMS acts as a store for the policies, manages the creation of new policies and the modification or deletion of existing policies, for instance based on user input obtained via the security system computing device 112 I/O, and provides one of more user interfaces via which a user of the computing system 102 can review and interact with the policies. The PSMS is configured for obtaining information about the state of the site at which the security system 100 is implemented from the security model, including information from the augmented topology map. The PSMS then evaluates access requests for various objects to access various spaces and presence permissions of various objects within spaces, based on the information present in the security model.

A space is any bounded physical location in a site through which objects can transit and which is associated with a number of attributes with respective attribute values. Each space is interconnected to at least one other space and is monitored by at least one security device 106. As described herein, physical access to a space may be gated or otherwise restricted by an access control device 104. As described herein, an object can be any entity which transits through the spaces and which is associated with a number of attributes having respective attribute values. In some examples, an object can be a person. In some examples, objects can be other entities such an animals and/or inanimate objects.

Attributes refer to the qualitative or quantitative characteristics assigned to an object or a space. Attributes can be associated with categorical values (e.g., an object type), with Boolean values (e.g. a door locked status), with numerical values (e.g., the carbon dioxide (CO2) level of a space), or with qualitative values (e.g., the color of a vehicle). As will be described in more detail herein, some attributes of a space can be relatively permanent, or non-transitory, such as dimensions of the space, the number and/or location of access control devices 104 and/or security devices 106 installed in the space, and/or some other non-changing attributes of a space (e.g., number of windows, occupancy limits, handicap accessibility, etc.). In contrast, other attributes of a space can be relatively dynamic, or transitory, such as the temperature of a space, the current occupancy of a space, the CO2 level of a space, and/or other attributes of a space that are subject to change. In general, non-transitory attributes of a space can be stored, or defined in, the augmented topology map of the site whereas the more transitory attributes of a space can be stored, or defined in, the security model.

Hereinafter, attributes of an object may be referred to as object attributes and attributes of a space may be referred to as space attributes. Moreover, the attributes themselves each have values that can be changed and/or updated in real-time in accordance with the security model and security data generated by one or more security devices 106. Values of the attributes can be referred to as attribute values. In that regard, object attribute values can be assigned to, or associated with, an object and space attribute values can be assigned to, or associated with, a space. In some examples, attribute values can be implemented as one or more of integers, percentages, vectors, and/or matrices. In some examples, attribute values include a combination of data types and/or formats. For example, an attribute value can include biometric data (e.g., face scan data, thumbprint data, retinal scan data, etc.), identifying information (e.g., a re-identification (reID) vector, a badge number, a name, etc.). In some examples, the security model can automatically determine attribute values for object and/or space attributes. In some examples, an operator can manually assign and/or modify (e.g., via the security system computing device 112 and/or the security system server 110) attribute values for object and/or space attributes.

As will be described in more detail herein, one example of an object attribute is an object's identity. An identity of an object is a qualitative or quantitative way of differentiating one object from another, based on one or more values for predetermined object attributes associated with an object on which access control/intrusion decisions hinge. In that regard, the identity of the object comprises one or more object attribute values that define the object. The object attribute values and/or the identity of the object can be managed and/or updated by the computing system 102 using the security model, the PSMS, the augmented topology map, and/or the security data generated by the security devices 106.

In some examples, attribute values are each associated with a confidence score. As used herein, a confidence score is a measure of certainty associated with any attribute values and, in some cases, with security data. For example, a confidence score can be a representation of how likely a given attribute value or security data point, as observed by a security device 106 and/or inferred by the computing system 102, is to correspond to reality. For examples in which confidence scores are determined for space or object attributes, the confidence score can be stored in association with the corresponding space or object attribute value.

In some examples, the confidence score can be single value, such as a percentage value (e.g., 95% certain the identity of this object is John Doe). In other examples, the confidence score can be a statistical model showing a probability distribution of possible identities for the object (e.g., 70% certain the identity of the object is John Doe, 25% certain the identity of the object is John Smith, 4.5% certain the identity of the object is John Jones, and 0.5% certain the identity of the object is Jack Doe). In such examples, the sum of the probabilities for each possible identity of the object would add up to 100%.

In some examples, in determining a confidence score for an identity of an object (e.g., by the security model and/or the PSMS), more than just a determination as to how likely the identity of the object is a particular candidate identity (e.g., person) is taken into account. For example, in determining a confidence score for an identity of an object, the respective likelihoods of each candidate identity for the identity of the object can be compared to one another. For example, the likelihood that the identity of the object is person A can be compared to the likelihood that the identity of the object is person B. Then, a determination regarding the confidence score for the identity of the object can be made based on the distance, or difference, between the respective likelihoods of the candidate identities. For example, assuming that the person A has a higher likelihood of being the identity of the object than person B, the greater the distance numerically (e.g., or percentagewise) between the likelihood that person A is the identity and the likelihood that person B is the identity, the higher the confidence score for person A being the identity of the object. Likewise, still assuming that the person A has a higher likelihood of being the identity of the object than person B, the smaller the distance numerically (e.g., or percentagewise) between the likelihood that person A is the identity and the likelihood that person B is the identity, the lower the confidence score for person A being the identity of the object.

In some example, the confidence score for a particular attribute can vary with time (e.g., decreases over time). In some examples, the confidence score for an attribute can be combined with a time value (e.g., a timestamp), where the value attributed to the confidence score varies as a function of its age (e.g., the time value becomes older). In such examples, the confidence score itself may not be evaluated when making access control decisions in the security system, but rather the value derived using the confidence score.

In some examples, confidence scores for attributes can be compared to thresholds when making an access control decision. For example, when the confidence score for an identity of an object exceeds a threshold, the object may be granted permission and/or access. However, when the confidence score for an identity of the object is less than a threshold, the object may be denied permission and/or access. In some examples, the confidence score for an attribute isn't compared to a threshold when making an access control decision. Rather, in such examples, the confidence score is evaluated using one or more formulations and/or rules to make an access control decision.

In view of the above, in implementing the security model during operation of the security system 100, the computing system 102 can dynamically manage access control for the site at which the security system 100 is implemented. For example, using the PSMS, the computing system 102 can determine and/or control which spaces an object is permitted to access based in part on one or more of object attribute values assigned to the object, respective space attribute values assigned to the spaces in the site, relationships between the object attribute values and/or space attribute values, and/or security data generated by security devices 106.

Moreover, in implementing the PSMS in conjunction with security model during operation of the security system 100, the computing system 102 can implement intrusion detection for the site at which the security system 100 is implemented. Intrusion detection, which may be enforced by one or more policies of the security system 100, is a security practice focused on determining whether an object is permitted to be located in a particular space based on information relating to the object and to the space. Intrusion detection may also be referred to as "presence permission detection." In operation, the computing system 102 and/or one or more security devices 106 generating security data can use the PSMS to determine whether an object detected to be present within a space is permitted to be in that space based on one or more of object attribute values assigned the object, space attribute values assigned to the particular space, relationships between the object attribute values and/or the space attribute values, and/or confidence scores for the object and/or object attribute values.

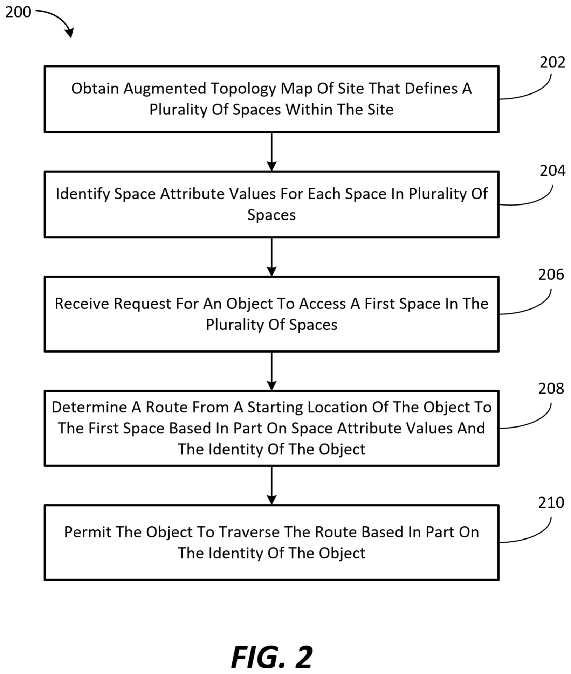

FIG. 2 is a flow diagram of method steps for managing access control with a security system, according to the present teachings. Although the method steps are described with reference to the system of FIG. 1, persons skilled in the art will understand that any system adapted to implement the method steps, in any order, falls within the scope of the present invention.

As shown, a method 200 begins at step 202, where an augmented topology map of a site is obtained. The augmented topology map defines, for example, a plurality of spaces (e.g., rooms, hallways, lobbies, etc.) in the site at which the security system 100 is implemented. In some examples, the computing system 102 obtains the augmented topology map from an external source. In some examples, the computing system 102 generates the augmented topology map.

At step 204, respective space attribute values are identified for each space included in the plurality of spaces. In some examples, identifying a space attribute value for a particular space includes obtaining the space attribute value from the security model or the augmented topology map. In some examples, identifying a space attribute value for a particular space includes updating an existing value of the space attribute value. In some examples, identifying a space attribute value to a particular space includes generating a new value for the space attribute value.

In some examples, the computing system 102 identifies the respective space attribute values that are assigned to each space included in the plurality of spaces. In some examples, the space attribute values are identified prior to the augmented topology map being obtained at step 202. The space attribute values can indicate, for example, environmental characteristics of the space, the type of space, characteristics of the access control devices 104 and/or security devices 106 associated with the space, a security clearance level associated with the space, a business purpose of the space, and/or any other information that describes the space.

At step 206, a request for an object to access a first space included in the plurality of spaces is received. For example, the computing system 102 receives a request for an object to access a first space in the site. In one particular example, the object is a person, the site is a building, and the first space is a conference room. In some examples, the object can be a non-person entity such as an animal, a vehicle, or some other type of object, such as a piece of luggage, a package, a manufacturing component, or the like. Moreover, in some examples, the site can be a physical location other than a building and the first space can be space other than a conference room.

In some examples, the computing system 102 receives the request as a user input at the security system computing device 112. For example, an operator of the security system computing device 112 inputs a request for the object to access the first space. In some examples, the request is received by the computing system 102 implicitly in the form of security data generated by a security device 106, the security data indicating an intention of the object to access the first space. For example, when a security device 106 implemented as a wireless badge reader reads someone's badge, the security data generated by the security device 106 in response to the reading indicates an intention of the person to access the first space.

At step 208, a route from a starting location of the object to the first space is determined based in part on the respective space attribute values assigned to each space included in the plurality of spaces and an identity of the object. For example, the computing system 102 uses the security model and/or the augmented topology map to determine the route from the starting location to the first space based on the respective space attribute values assigned to each space included in the plurality of spaces and an identity of the object. The computing system 102 can, for example, identify a space along the route through which the object is permitted to transit based in part on one or more object attribute values that are in compliance with one or more policies associated with the space.

As described herein, an identity of an object is a qualitative or quantitative way of differentiating one object from another, based on one or more values for predetermined object attributes associated with an object on which access control/intrusion decisions hinge. In that regard, the identity of the object comprises one or more object attribute values that define the object. The object attribute values and/or the identity of the object can be managed and/or updated by the computing system 102 using the security model, the PSMS, and/or the security data generated by the security devices 106.

In some examples, the route includes at least one access control device 104 or at least one security device 106 disposed between the starting location and the first space. In some examples, the route includes one or more other spaces in the site through which the object is permitted to transit in accordance with the policies of the security model. Moreover, in determining the route, the computing system 102 can identify one or more spaces in the site through which the object is not permitted to transit and avoid including those one or more spaces in the route. To identify a space in the site through which the object is not permitted to transit, the computing system 102 can, for example, identify one or more attributes (e.g., clearance level attribute) of the object that are not in compliance with one or more policies (e.g., clearance level policies) associated with that space.

At step 210, the object is permitted to traverse the route physically restricted by the at least one access control device 104 and/or monitored by the at least security device 106 based in part on the identity of the object. For example, the computing system 102 permits the object to traverse the route to the first space based in part on the identity of the object. In determining that the object is permitted to traverse the route, in some examples, the computing system 102 determines that one or more of the object attribute values that comprise the identity of the object match, or conform to one or more policies along with corresponding space attribute values of one or more spaces along the route. In some examples, permitting the object to traverse route includes pushing configuration parameters to an access control device 104 disposed along the route. In some examples, permitting the object to traverse the route includes unlocking and/or opening one or more access control devices thereby permitting the object to transit through spaces along the route. In some examples, permitting the object to traverse the route includes communicating access permission data to one or more of the access control devices 104. In some examples, the computing system 102 displays the route on the augmented topology map.

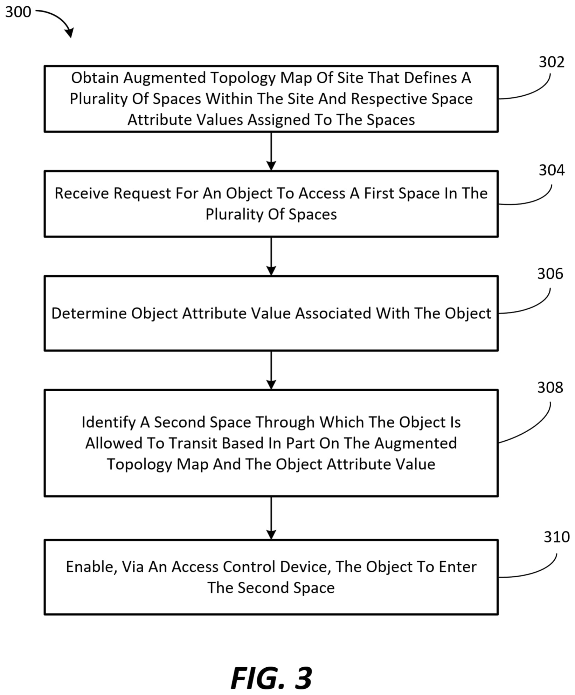

FIG. 3 is a flow diagram of method steps for managing access control with a security system, according to the present teachings. Although the method steps are described with reference to the system of FIG. 1, persons skilled in the art will understand that any system adapted to implement the method steps, in any order, falls within the scope of the present invention.

As shown, a method 300 begins at step 302, where an augmented topology map of a site is obtained. The augmented topology map defines, for example, a plurality of spaces (e.g., rooms, hallways, lobbies, etc.) in the site at which the security system 100 is implemented. In some examples, the computing system 102 obtains the augmented topology map from the security model or an external source. In some examples, the computing system 102 generates the augmented topology map.

At step 304, a request for an object to access a first space included in the plurality of spaces is received. For example, the computing system 102 receives a request for an object to access a first space in the site. In one particular example, the object is a person, the site is a building, and the first space is a conference room. In some examples, the object can be a non-person entity such as an animal, a vehicle, or some other type of object. Moreover, in some examples, the site can be a physical location other than a building and the first space can be space other than a conference room.

In some examples, the computing system 102 receives the request as a user input at the security system computing device 112. For example, an operator of the security system computing device 112 inputs a request for the object to access the first space. In some examples, the request is received by the computing system 102 implicitly in the form of security data generated by a security device 106, the security data indicating an intention of the object to access the first space.

At step 306, an object attribute value associated with the object is determined. In some examples, the computing system 102 determines the object attribute value based on a user input (e.g., via the security system computing device 112). In some examples, the computing system 102 receives security data generated by a security device 106 and infers, or determines, an object attribute value based on the security data. In some examples, the object attribute value indicates a business purpose associated with the object or a clearance level associated with the object. In some examples, the object attribute value indicates a trust level and/or a risk level associated with the object.

Although step 306 describes acquiring an object attribute value in response to a discrete event or action, such as a request by an object to access a space, in some examples, the security model can acquire and/or update object attribute values not in response to particular actions or events. For example, the security model implemented by the computing system 102 can update itself (e.g., update object attribute values, space attribute values, etc.) continually, in real-time, and thus will be constantly aware of the object attribute values. So in many cases, the acquisition of object attribute values is occurring outside of requests by an object to access a space.

At step 308, a second space through which the object is allowed to transit is identified. The second space is, for example, disposed between the first space and a starting location of the object.

The computing system 102 can determine, or identify, the second space through which the object is allowed to transit based in part on one or more of object attribute values (which are present or defined in the security model), the augmented topology map (which encodes some of the space attribute values), and the policies in place within the security system 100. In some examples, in addition to or as an alternative to the augmented topology map, one or more space attribute values can be present or defined in the security model. In some examples, the policies are present in the security model. However, in other examples, the policies are separate from and exist outside of the security model, such as within the PSMS.

In some examples, the computing system 102 identifies the second space based in part on a comparison between the object attribute value and corresponding space attribute values associated with the plurality of spaces defined by the augmented topology map. For example, the computing system 102 identifies the second space in response to determining that (i) the second space is disposed between the first space and a starting location of the object and (ii) the object attribute value is in compliance with one or more active policies associated with the second space. In one non-limiting example, the computing system 102 determines that the object attribute value indicates a clearance level of the object that is in compliance with a policy that stipulates which clearance levels for an object and are permitted to access the second space. More generally, policies can stipulate maximum attribute values, minimum attribute values, ranges of acceptable values, and/or other attribute values for objects and spaces.

In the above examples described with respect to step 308, the second space is generally described as having attributes. However, in some examples, the security model and/or augmented topology map can also define connections between spaces (e.g., doors, hallways, etc.) as their own entities, complete with their own attributes and attribute values. For example, a first space that is a conference room may be separated from, or interconnected with, a second space that is a lobby by two different doors. In this example, each of the two doors can be defined as their own entities, complete with their own respective attributes and attribute values (e.g., first door is only for exiting, second door only for entering, one of the doors is only an emergency exit, etc.). In other examples, interconnections may instead be treated as their own spaces and/or connections are attribute-less.

At step 310, the object is enabled to enter the second space via at least one access control device. For example, the computing system 102 (e.g., via the PSMS) disengages, unlocks, and/or opens an access control device 104 that gates off the second space, thereby enabling the object to enter the second space, provides an updated configuration to the access control device 104, or the like. The access control device 104 can be one or more of a door, an electronic door lock, a gate, a pneumatic door lock, a turnstile gate, and/or any other suitable type of access control device.

In some examples, the method 300 also includes identifying, by the computing system 102, a third space disposed between the first space and a starting location of the object through which the object is not allowed to transit. The computing system 102 can, for example, identify the third space based in part on the augmented topology map and one or more policies associated with the third space that the object attribute value is not in compliance with. In such examples, the method 300 further includes preventing, by the computing system 102 via at least one access control device 104 (e.g., an electronic door lock), the object from entering the third space. Moreover, in such examples, the route generated by the computing system 102 does not include passage through the third space.

In some examples, the method 300 further includes receiving, by the computing system 102, security data generated by one or more security devices 106. In such examples, the computing system 102 can determine, based in part on the security data, that the object has attempted to enter the third space without permission one or more times. For example, the computing system 102 detects, within the security data, a number of attempts by the object to enter the third space that exceeds a threshold. In response to detecting that the object has attempted to enter the third space a number of times that exceeds the threshold, the computing system 102 can modify a trust attribute value (e.g., reduce the trust attribute value) and/or a risk attribute value (e.g., increase the risk attribute value) associated with the object. Moreover, the computing system 102 can further restrict access to the second space based in part on the modified trust and/or risk attribute values associated with the object.

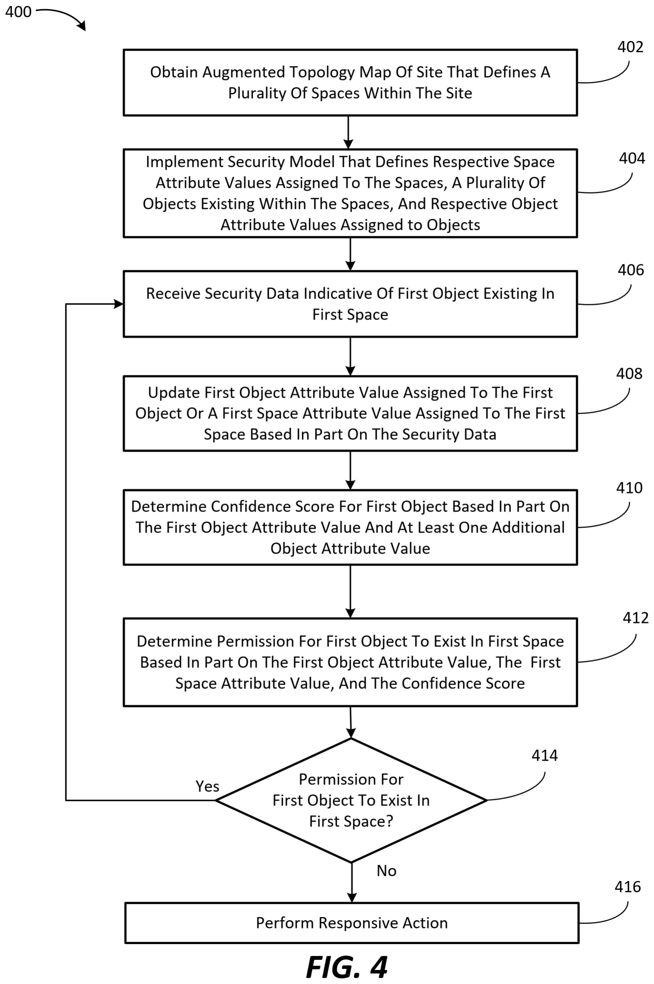

FIG. 4 is a flow diagram of method steps for implementing intrusion detection with a security system, according to the present teachings. Although the method steps are described with reference to the system of FIG. 1, persons skilled in the art will understand that any system adapted to implement the method steps, in any order, falls within the scope of the present invention.

As shown, a method 400 begins at step 402, where an augmented topology map of a site is obtained. The augmented topology map defines, for example, a plurality of spaces (e.g., rooms, hallways, lobbies, etc.) in the site at which the security system 100 is implemented. The augmented topology map may be included in and/or implemented in conjunction with a larger security model. In some examples, the computing system 102 obtains the augmented topology map from the security model and/or from an external source. In some examples, the computing system 102 generates the augmented topology map.

At step 404, the security model is implemented. For example, the computing system 102 implements the security model for the security system 100. The security model comprises a data structure that defines, for example, the respective space attributes assigned to each space in the plurality of spaces, a plurality of objects existing within the plurality of spaces, and object attribute values assigned to each object included in the plurality of objects.

At step 406, security data indicative of a first object existing in a first space included in the plurality of spaces is received. For example, the computing system 102 receives, from a security device 106, data indicative of the first object existing in the first space. The first object can be included in a plurality of objects defined in the security model. Moreover, the first space is included in the plurality of spaces defined in the augmented topology map.

At step 408, at least one of a first object attribute value associated with the first object and a first space attribute value associated with the first space are updated based in part on the security data. For example, the computing system 102 and/or the security device 106 detects, within the security data, updated values for the first object attribute value and the first space attribute value and subsequently updates, within the security model and/or the augmented topology map, the first object attribute value and the first space attribute value.

At step 410, a confidence score associated with the first object attribute is determined based in part on the first object attribute value and at least one additional object attribute value assigned to the first object. The at least one additional object attribute value assigned to the object can be, for example, defined in the security model and/or discerned from the security data. In some examples, the computing system 102 determines the confidence score. In other examples, the security device 106 can directly determine the confidence score.

At step 412, a permission for the first object to exist in the first space is determined based in part on the first object attribute value, the confidence score, and one or more policies associated with the first space. For example, the computing system 102 and/or the security device 106 can determine a permission for the first object to exist in the first space based on an evaluation of a policy that stipulates acceptable values and/or ranges of values for the first object attribute value and the first space attribute value. As another example, the computing system 102 and/or the security device 106 can determine a permission for the first object to exist in the first space based on a comparison of the confidence score to a threshold and/or an evaluation of the confidence score with respect to one or more confidence score policies and/or formulations.

In some examples, the first object may have a positive permission to exist in the first space (e.g., is permitted to exist in the first space) when the values of the first object attribute and the first space attribute are in compliance with, or satisfy, one or more policies associated with the first space and/or when the confidence score exceeds a threshold. Conversely, in some examples, the first object may have a negative permission to exist in the first space (e.g., is not permitted to exist in the first space) when the values of the first object attribute and the first space attribute are not in compliance with (e.g., do not satisfy) one or more policies associated with the first space and/or when the confidence score is less than a threshold.

At step 414, the method 400 proceeds based on the permission determined at step 412. For example, if at step 412 a positive permission for the first object to exist in the first space was determined (e.g., the first object is permitted to exist in the first space), the method 400 returns to step 406 where new security data is received.

However, if at step 412 a negative permission for the first object to exist in the first space was determined (e.g., the first object is not permitted to exist in the first space), the method 400 proceeds from step 414 to step 416 where the security system 100 reacts by performing one or more responsive actions. Performing one or more responsive action can include, without limitations, issuing an alert to an operator, sending an email and/or other message to an operator, issuing a message over a public address (PA) system, locking one or more doors, changing the response of one or more access control devices 104 to activate a man trap, raising a threat level within the security system 100, and/or one or more other suitable actions. In a broad sense, any automatable action can be taken in response to detecting an anomalous presence. In some examples, performing one or more responsive actions can include updating an attribute value associated with the first object and/or an attribute value associated with the first space to indicate an anomalous presence of the first object.

In some examples, issuing an alert to an operator includes causing display of an alert indicative of an intrusion event on a display of the computing device of the operator (e.g., on a display of the security system computing device 112). In some examples, issuing an alert to an operator includes causing the display of one or more security data feeds generated by one or more security devices 106 on a display of the computing device of the operator (e.g., on a display of the security system computing device 112). In some examples, issuing an alert to an operator includes transmitting a message indicative of an intrusion event to one or more computing devices associated with operators of the security system 100.

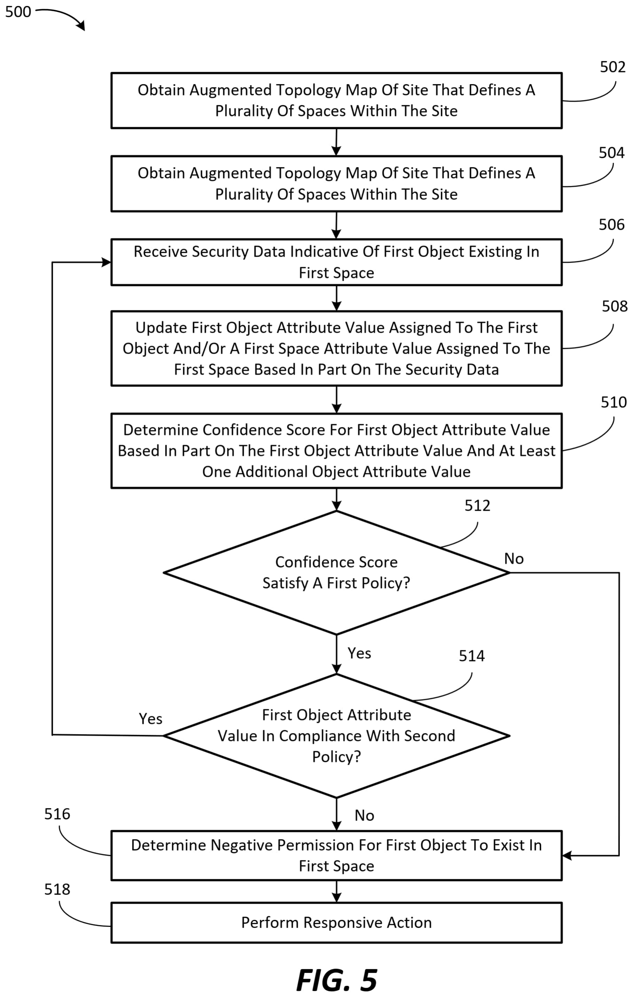

FIG. 5 is a flow diagram of method steps for implementing intrusion detection with a security system, according to the present teachings. Although the method steps are described with reference to the system of FIG. 1, persons skilled in the art will understand that any system adapted to implement the method steps, in any order, falls within the scope of the present invention.

As shown, a method 500 begins at step 502, where an augmented topology map of a site is obtained. The augmented topology map defines, for example, a plurality of spaces (e.g., rooms, hallways, lobbies, etc.) in the site at which the security system 100 is implemented. The augmented topology map may be included in and/or implemented in conjunction with a larger security model. In some examples, the computing system 102 obtains the augmented topology map from the security model and/or from an external source. In some examples, the computing system 102 generates the augmented topology map.

At step 504, the security model is implemented. For example, the computing system 102 implements the security model for the security system 100. The security model comprises a data structure that defines, for example, the respective space attributes assigned to each space in the plurality of spaces, a plurality of objects existing within the plurality of spaces, and object attribute values assigned to each object included in the plurality of objects.

At step 506, security data indicative of a first object existing in a first space included in the plurality of spaces is received. For example, the computing system 102 receives, from a security device 106, data indicative of the first object existing in the first space. The first object can be included in a plurality of objects defined in the security model. Moreover, the first space is included in the plurality of spaces defined in the augmented topology map.

At step 508, a first object attribute value associated with the first object and/or a first space attribute value associated with the first space are updated based in part on the security data. For example, the computing system 102 and/or the security device 106 determines, based on the security data, updated values for the first object attribute value and the first space attribute value and subsequently updates, within the security model and/or the augmented topology map, the first object attribute value and the first space attribute value.

At step 510, a confidence score associated with the first object attribute is determined based in part on the first object attribute value and at least one additional object attribute value assigned to the first object. The at least one additional object attribute value assigned to the object can be, for example, defined in the security model and/or discerned from the security data. In some examples, the computing system 102 determines the confidence score. In other examples, the security device 106 can directly determine the confidence score.

At step 512, it is determined whether the confidence score satisfies a first policy in effect in the security system 100. If it is determined at step 510 that the confidence score does not satisfy the first policy (e.g., No), the method 500 proceeds to step 516 where a negative permission for the first object to exist in the first space is determined (e.g., the first object is not permitted to exist in the first space). If it is determined at step 512 the confidence score does satisfy the first policy (e.g., Yes), the method 500 proceeds to step 514. In some examples, the computing system 102 performs step 512. In some examples, the security device 106 can perform step 512.

At step 514, it is determined whether the first object attribute value is in compliance with one or more second policies associated with the first space. For example, it is determined whether the first object attribute value and/or the first space attribute value are in compliance with, or satisfy, one or more values stipulated by a second policy associated with the first space.

If it is determined at step 514 that the first object attribute value matches is in compliance with the one or more second policies (e.g., Yes), a positive permission for the first object to exist in the first space is determined (e.g., the first object is permitted to exist in the first space) and the method 500 returns to step 506 where new security data is received. If it is determined at step 514 that the first object attribute value is not in compliance with the one or more second policies (e.g., No), the method 500 proceeds to step 516 where a negative permission for the first object to exist in the first space is determined (e.g., the first object is not permitted to exist in the first space). In some examples, the computing system 102 performs step 512. In some examples, the security device 106 can perform step 512.

At step 518, the security system 100 reacts by performing one or more responsive actions. Performing one or more responsive action can include, without limitations, issuing an alert to an operator, sending an email and/or other message to an operator, issuing a message over a public address (PA) system, locking one or more doors, changing the response of one or more access control devices 104 to activate a man trap, raising a threat level within the security system 100, and/or one or more other suitable actions. In a broad sense, any automatable action can be taken in response to detecting an anomalous presence.

In some examples, issuing an alert to an operator includes causing display of an alert indicative of an intrusion event on a display of the computing device of the operator (e.g., on a display of the security system computing device 112). In some examples, issuing an alert to an operator includes causing the display of one or more security data feeds generated by one or more security devices 106 on a display of the computing device of the operator (e.g., on a display of the security system computing device 112). In some examples, issuing an alert to an operator includes transmitting a message indicative of an intrusion event to one or more computing devices associated with operators of the security system 100.
security system computing device 112security system computing device 112

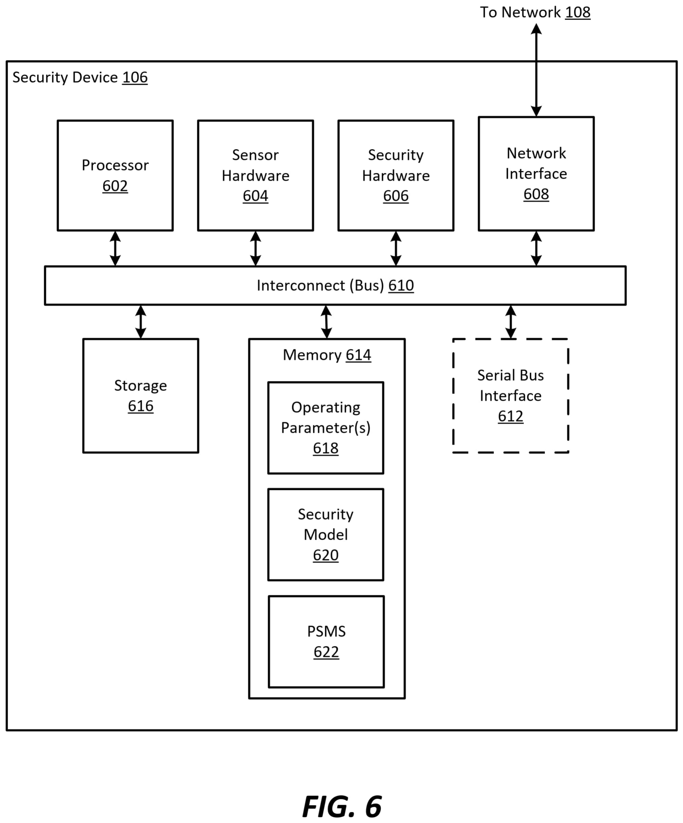

FIG. 6 is a block diagram of a security device 106 that may be implemented in conjunction with the security system 100, according to present teachings. As shown, the security device 106 may include, without limitation, a processor 602, sensor hardware 604, security hardware 606, a network interface 608, an interconnect 610, a serial bus interface 612, memory 614, and storage 616. The interconnect, or bus, 610 can include one or more wires, cables, traces, contacts, analog components, digital components, wireless connection components, or other suitable means for interconnecting hardware components of the security device 106.

The sensor hardware 604 can include, without limitation, one or more of an image sensor, an audio sensor, a motion sensor, an RFID sensor, a barcode reader, and/or some other suitable sensing means. The security hardware 606 can include one or more actuators, motors, linkages, and/or other mechanisms associated with operation of the security device 106. For example, if the security device 106 is implemented as a surveillance camera, the security hardware 606 can include an actuator used for rotating the camera and/or mechanisms used for adjusting the field of view of the camera.

The processor 602 is adapted to control the security device 106 (e.g., the sensor hardware 604 and/or the security hardware 606) to operate and generate security data in accordance with one or more operating parameters 618 included in the memory 214 and/or the storage 216. For an example in which the security device 106 is a surveillance camera, the processor 202 controls the security device 106 to generate security data, such as video content, in accordance with the operating parameters 618. In some examples, security data generated by the security device 106 can include one or more of video data, audio data, biometric data (e.g., facial recognition data, retinal scan data, thumbprint data, and/or identifying data such as user credentials, a barcode, and/or other identifying information of an object).

The processor 602 is further adapted to transmit security data to the computing system 102. For example, the processor 602 can transmit security data to the computing system 102 via the network interface 608 and the network 108. As another example, the processor 602 can transmit security data directly to a device in the computing system 102 (e.g., the security system computing device 112 and/or a security system server 110) via the serial bus interface 612.

In some examples, the processor 602 can be adapted to implement one or more functions of a security model and/or a PSMS described herein. For example, the processor 602 can implement one or more functions of the security model 620 and/or the PSMS 622 stored in the memory 614 and/or the storage 616. In that regard, in implementing the security model 620 and the PSMS 622, the processor 602 can perform one or more steps described in the flowcharts of FIGS. 2-5, one or more functions of the security model described with respect to FIG. 1, and/or any other functions of a security model and/or PSMS described hereinafter.

For example, the processor 602 can implement the security model 620 to update and/or assign attribute values to objects and/or spaces captured in security data generated by the security device 106, retrieve attribute values for objects and/or spaces from an augmented topology map, determine confidence scores associated with objects and/or object attribute values detected within security data generated by the security device 106, and/or perform any other function described herein with respect to the security model implemented by the computing system 102 and/or security devices 106. As another examples, the processor 602 can implement an instance of the PSMS 622 to, make access control decisions and/or control access to one or more spaces via the access control devices 104, detect the occurrence of an intrusion within one or more spaces in the site, and/or perform any other function described herein with respect to the PSMS implemented by the computing system 102 and/or security devices 106.

In some examples in which a security device 106 is a surveillance camera, in implementing the security model 620 and/or the PSMS 622, the processor 602 can be adapted to implement facial recognition techniques and/or other image analysis techniques to determine one or more of the following based on video content generated by the security device 106: a positive permission for an object detected in the video content to exist within a space detected in the video content, a negative permission for an object detected in the video content to exist within a space detected in the video content, an identity of an object detected in the video content, a confidence score for an attribute and/or identity of an object detected in the video content, a space attribute value for a space detected in the video content, and/or some other attribute value and/or characteristic that can be used to inform access control decisions and/or intrusion detection decisions.

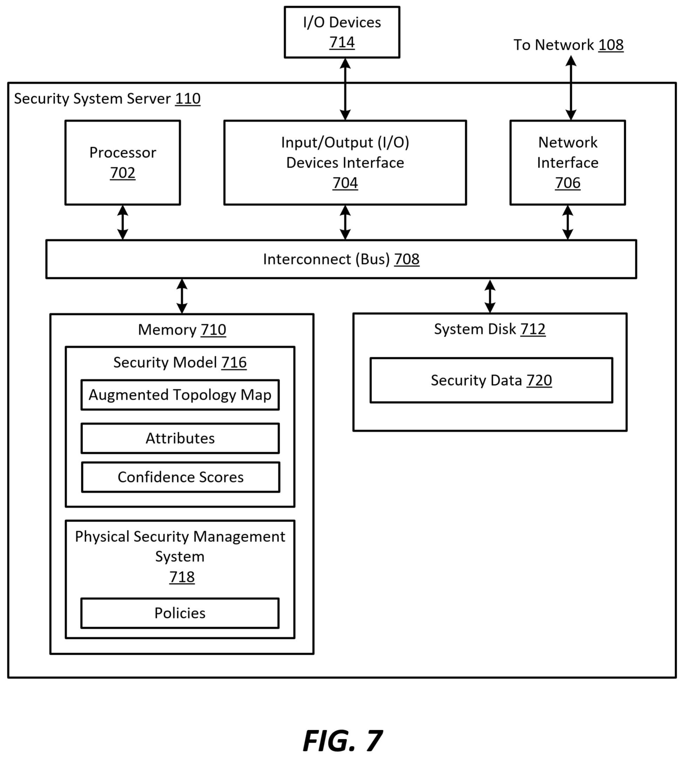

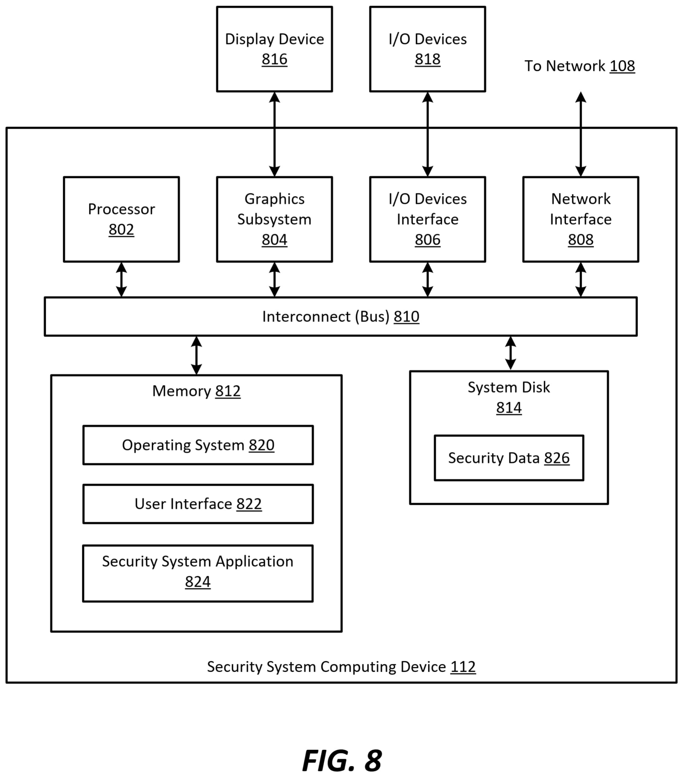

FIG. 7 is a block diagram of a security system server 110 that may be implemented in conjunction with the computing system 102 of FIG. 1, according to present teachings. As shown in FIG. 8, the security system server 110 includes, without limitation, a processor 702, an input/output (I/O) devices interface 704, a network interface 706, an interconnect 708, a system memory 710, and a system disk 712. The interconnect, or bus, 708 can include one or more wires, cables, traces, contacts, analog components, digital components, wireless connection components, and/or other suitable means for interconnecting hardware components of the security system server 110.

The processor 702 is adapted to retrieve and execute programming instructions, such as the security system model 716 and the physical security management software (PSMS) 718, stored in the system memory 710. Similarly, the processor 702 is adapted to store application data in (e.g., software libraries) and retrieve application data from the system memory 710. The interconnect 708 is adapted to facilitate transmission of data, such as programming instructions and application data, between the processor 702, the I/O devices interface 704, the network interface 706, the system memory 710, and the system disk 712. The I/O devices interface 704 is adapted to receive input data from I/O devices 714 and transmit the input data to the processor 702 via the interconnect 708. For example, I/O devices 714 may include one or more buttons, a keyboard, a mouse, and/or other input devices. The I/O devices interface 704 is further adapted to receive output data from the processor 702 via the interconnect 708 and transmit the output data to the I/O devices 714.

The system disk 712 may include one or more hard disk drives, solid state storage devices, or similar storage devices. The system disk 712 is adapted to store non-volatile data such as files (e.g., audio files, video files, subtitles, application files, software libraries, etc.). For example, the system disk 712 is adapted to store security data 720 generated by security devices 106 in the security system 100. In some examples, the system disk 712 is further adapted to store the security model 716, the PSMS 718, an augmented topology map, attribute values, and/or one or more other policies that can be enforced by the PSMS 718 in conjunction with the security model 716.

The system memory 710 includes software instructions for running the security model 716 the PSMS 718. The security model 716 can be, for example, similar to and/or the same as the security model 620 described with respect to FIG. 6 or the security model described with respect to FIGS. 1-5. As described herein with respect to FIGS. 1-6, the security model 716 is the software which represents the spaces within a site, the objects within those spaces, respective attributes of the objects and spaces, and the relationships between the spaces and objects. Moreover, the security model 716 can update (e.g., periodically, continuously, on an ad-hoc basis) existing attribute values for object and/or spaces represented in the security model 716 and/or can determine and/or assign attribute values for new object attributes and/or space attributes represented in the security model 716. The security model 716 can modify existing and/or create new attribute values automatically or based on user input (e.g., operator input received at the security system computing device 112). In some cases, the security model 716 will operate a "digital twin" which is continuously updated in real-time using security data generated by one or more security devices 106.

In some examples, in implementing the security model 716, the security system server 110 obtains and manages an augmented topology map of the site at which the security system 100 is implemented and/or installed. As shown in FIG. 7, the augmented topology map can be stored in memory 710 and/or integrated with the security model 716. In some examples, the augmented topology map can be stored in system disk 712. In some examples, the augmented topology map can be hosted on an external computing device connected to the security system server 110 via the network 108.

The physical security management system (PSMS) 718, for its part, is responsible for making access control and/or intrusion decisions using the information stored in the security model 716 and based on the policies currently in effect. In some embodiments, the PSMS 718 acts as a store for the policies, manages the creation of new policies and the modification or deletion of existing policies, for instance based on user input obtained via the I/O devices 718, and provides one of more user interfaces via which a user of the system can review and interact with the policies. The PSMS 718 is configured for obtaining information about the state of the site at which the security system 100 is implemented from the security model 716, including information from the augmented topology map. The PSMS 718 then evaluates access requests for various objects to access various spaces and presence permissions of various objects within spaces, based on the information present in the security model 718.

In some examples, in implementing the security model 716 during operation of the security system 100, the security system server 110 can dynamically manage access control for the site at which the security system 100 is implemented, for instance via the PSMS 818. For example, the security system server 110 can, by implementing the PSMS 818, determine and/or control which spaces an object is permitted to access based in part on one or more of object attribute values assigned to the object, respective space attribute values assigned to the spaces in the site, relationships between the object attribute values and/or space attribute values, and/or security data generated by security devices 106, as well as the policies currently in effect, as represented within the PSMS 718. In some examples, the security system server 110 can use the security model 716 and the PSMS 718 to implement access control methods 200 and/or 300.

Moreover, in implementing the security model 716 during operation of the security system 100, the security system server 110 can implement intrusion detection for the site at which the security system 100 is implemented, for instance via the PSMS 718. As described herein, intrusion detection, which may be enforced by one or more policies represented within the PSMS 718, is a security practice focused on determining whether an object is permitted to be located in a particular space based on information relating to the object and to the space. In implementing the PSMS 718, the security system server 110 and/or one or more security devices 106 generating security data can determine whether an object detected to be present within a space is permitted to be in that space based on one or more of object attribute values assigned the object, space attribute values assigned to the particular space, relationships between the object attribute values and/or the space attribute values, and/or confidence scores for an identity the object and/or for one or more object attribute values, as well as the policies currently in effect, as represented within the PSMS 718. In some examples, the security system server 110 can use the security model 816 to implement intrusion detection methods 400 and/or 500.

In some examples, the security system server 110 implements the PSMS 718 to push configuration parameters to one or more access control devices 104 included in the security system 100, remotely disengage, unlock, and/or open one or more access control devices 104, remotely engage, lock, and/or close one or more access control devices 104, and/or otherwise control operation of one or more access control devices 104. In some examples, the security system server 110 implements the PSMS 718 to push configuration parameters and/or operating parameters to one or more access security devices 106 included in the security system 100, remotely control operation of one or more security devices 106, receive security data generated by one or more security devices 106, update the augmented topology map in accordance with security data and/or other information received from one or more security devices 106, synchronize changes to the augmented topology map and/or one or more attribute values made by one or more security devices 106, and/or perform one or more other actions associated with the security devices 106.

Moreover, the security system server 110 can implement the SMS 718 to update the security model 716 to modify and/or assign attribute values to objects and/or spaces captured in security data generated by a security device 106, retrieve attribute values for objects and/or spaces from an augmented topology map, make access control decisions and/or control access to one or more spaces via the access control devices 104, determine confidence scores associated with object identities and/or object attribute values detected within or inferred from security data generated by the security devices 106, detect the occurrence of an intrusion within one or more spaces in the site, and/or perform any other function described herein with respect to the a security model implemented by the computing system 102 and/or security devices 106.

In some examples, the actions described herein as being performed by the security system server 110 can additionally and/or alternatively be performed by the security system computing device 112. For example, in some instances, the security model 716 and/or the PSMS 718 can be implemented locally on the security system computing device 112. In some examples, the security system server 110 can additionally and/or alternatively perform the actions described herein as being performed by the security system computing device 112.

In some examples, an operator can use the security system computing device 112 to interact with and/or control the security model 716 and/or PSMS 718 implemented on the security system server 110. For example, an operator can use a security system application running on the security system computing device 112 to connect to and interact with the security model 716 and/or the PSMS 718 running on the security system server 110.

FIG. 8 is a block diagram of a security system computing device 112112 that may be implemented in conjunction with the computing system 102, according to present teachings. The security system computing device 112112 may be implemented as one or more of a desktop computer, a laptop, a tablet, a smart phone, a server, or some other similar computing device.

As shown, the security system computing device 112112 may include, without limitation, a processor 802, a graphics subsystem 804, an I/O devices interface 806, a network interface 808, an interconnect 810, a memory subsystem 812, and a system disk 814. The interconnect 810 is adapted to facilitate transmission of data, such as programming instructions and application data, between the processor 802, the graphics subsystem 804, the I/O devices interface 806, the network interface 808, the memory subsystem 812, and the system disk 814.

In some embodiments, the processor 802 (e.g., a CPU or similar processor) is adapted to retrieve and execute programming instructions stored in the memory subsystem 812. Similarly, the processor 802 is adapted to store and retrieve application data (e.g., software libraries) residing in the memory subsystem 812 and/or the system disk 814. The interconnect 810 is adapted to facilitate transmission of data, such as programming instructions and application data, between the processor 802, the graphics subsystem 804, the I/O devices interface 806, the network interface 808, the memory subsystem 812, and the system disk 814.

In some embodiments, the graphics subsystem 804 is adapted to generate frames of image and/or video data and transmit the frames of image and/or video data to display device 816. In some embodiments, the graphics subsystem 804 may be integrated into an integrated circuit, along with the processor 802. The display device816 may comprise any technically feasible means for generating an image for display. For example, the display device 816 may be fabricated using liquid crystal display (LCD) technology, cathode-ray technology, and light-emitting diode (LED) display technology. The display device 816 may include, for example, one or more monitors.

The input/output (I/O) device interface 806 is adapted to receive input data from user I/O devices 818 and transmit the input data to the processor 802 via the interconnect 810. For example, user I/O devices 818 may comprise one or more buttons, a keyboard, and a mouse or other pointing device. The I/O device interface 806 also includes an audio output unit adapted to generate an electrical audio output signal. User I/O devices 818 may comprise one or more speakers adapted to generate an acoustic output in response to the electrical audio output signal. In alternative embodiments, the display device 816 may include the speaker. In some examples, one or more security devices 106 can be connected to the security system computing device 112112 via the I/O devices interface 806.

The network interface 808 is adapted to transmit and receive packets of data via the network 108. For example, the network interface 808 is used to configure and/or control operation of access control devices 104, receive security data from one or more security devices 106, transmit security data to the security system server 110, and/or access the security system 100 via the security system server 110. In some embodiments, the network interface 808 is adapted to communicate using the well-known Ethernet standard. The network interface 808 is coupled to the processor 802 via the interconnect 810.

The system disk 814, such as a hard disk drive or flash memory storage drive, is adapted to store non-volatile data. For example, the system disk 814 can store security data 826 generated by the one or more security devices 106.

In some embodiments, the memory subsystem 812 includes programming instructions and application data that comprise an operating system 820, a user interface 822, and a security system application 824. The operating system 820 performs system management functions such as managing hardware devices including graphics subsystem 804, I/O device interface 806, the network interface 808, and system disk 814. The operating system 820 also provides process and memory management models for the user interface 822, the security system application 824. The user interface 822, such as a window and object metaphor, provides a mechanism for user interaction with security system computing device 112. Persons skilled in the art will recognize the various operating systems and user interfaces that are well-known in the art and suitable for incorporation into the security system computing device 112.

In some examples, the security system application 824 is a web-based application that provides access to the security model 716 and/or the PSMS 718 running on the security system server 110, and which, for instance, may run in or via a browser. In other examples, the security system application 824 is a native software application that is stored locally in the memory 812 and/or the system disk 814.

The security system application 824 can be used to perform one or more of the functions described herein with respect to the security model 716 and/or the PSMS 718. For example, the security system application 824 can be used by an operator to connect to the security model 716 and create and/or modify, using one or more I/O devices 818, the augmented topology map, one or more object attribute values, and/or one or more space attribute values present in the security model 716. As another example, the security system application 824 can be used by an operator to connect to the PSMS 718 and create new policies, modify existing policies, and/or change which policies are in effect.

In some examples, the security system application 824 can perform one or more of the functions described herein with respect to the security model 716 and/or the PSMS 718 locally on the security system computing device 112 without connecting to the security system server 110. That is, in some examples, the security system application 824 can be used to perform one or more functions described herein as being performed by the security model 716 and/or the PSMS 718 running on the security system server 110.

In some examples, the actions described herein as being performed by the security system computing device 112(?) can additionally and/or alternatively be performed by the security system server 110(?). In some examples, the security system computing device 112 can additionally and/or alternatively perform the actions described herein as being performed by the security system server 110.

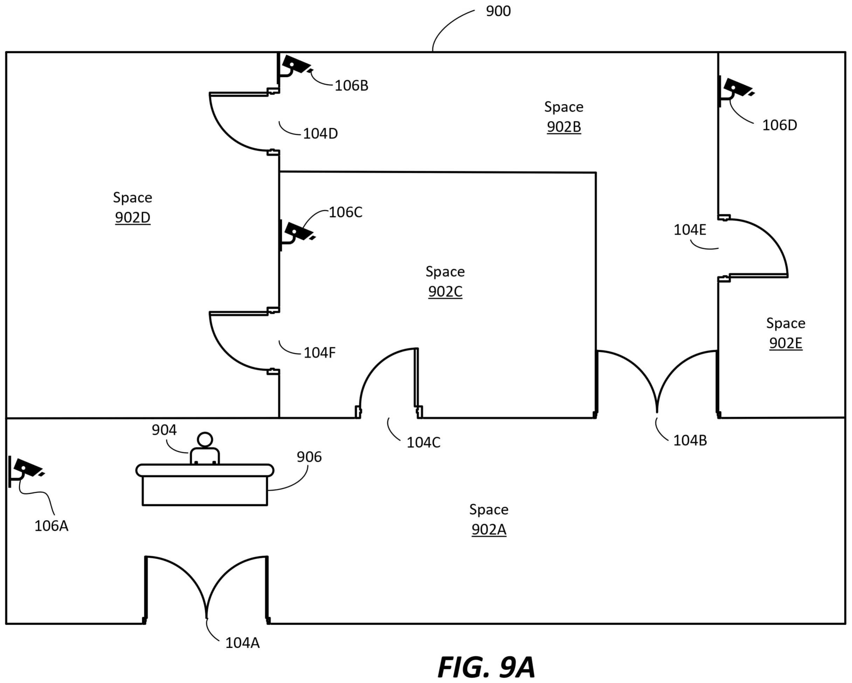

FIG. 9A illustrates an example visual representation of an augmented topology map 900 of the site at which the security system 100 is implemented, according to the present teachings. That is, the visual representation of the augmented topology map 900 is a visual representation of the data that is stored in the augmented topology map (e.g., stored in the security model 716 as an augmented topology), but is not necessarily a representation of what the data structure of an augmented topology map actually looks like and/or how the data of an augmented topology map would be structured in the security model 716.

In the illustrated example of FIGS. 9A-9H, the site at which the security system 100 is implemented is a building. In that regard, the augmented topology map 900 is illustrated as a floor plan of the building. However, persons skilled in the art should understand that in other examples in which the site is an area or location other than a building (e.g., a campus, a premises with multiple buildings, a manufacturing facility, etc.), the augmented topology map 900 can be implemented using a visual representation other than a floor plan. Moreover, persons skilled in the art should understand that the spaces, access control devices 104, security devices 106, and other objects shown in the augmented topology map 900 are provided as non-limiting examples, and that in other examples, the augmented topology map 900 can represent any different number and/or type of spaces, access control devices 104, security devices 106, and/or objects.

As described herein, the augmented topology map 900 is a data structure used to represent the physical site at which the security system 100 is implemented, the separate spaces within the site, the non-transitory attributes (e.g., dimensions, maximum capacity, accessibility for handicapped persons, etc.) of those spaces, the interconnection between those spaces (which may have their own attributes), and, in some cases, the distribution and arrangement of access control devices 104 and/or security devices 106 within those spaces. However, the augmented topology map 900 is not typically used to represent and/or define transitory attributes (e.g., current capacity, CO2 levels, etc.) of the spaces in the augmented topology map. Rather, these transitory space attributes can be defined by and/or represented in the larger security model 716.

Moreover, the augmented topology map 900 can also be used to represent non-transitory objects, such as access control devices 104 and/or security devices 106, positioned within the spaces of the physical location and the attributes of those non-transitory objects. Notably, however, the augmented topology map 900 is not typically used to represent and/or define transitory objects, such as people or vehicles, that may transit through spaces defined in the augmented topology map. Rather, as described herein, those transitory objects can be defined by and/or represented in the larger security model 716. In that regard, the security model 716 and the augmented topology map 900 illustrated in FIGS. 9A-9H includes and/or is stored (e.g., in the computing system 102 and/or security devices 106) in association with many values, attributes, and/or other data elements not illustrated in FIGS. 9A-9D. In some examples, the augmented topology map 900 is included in the security model 716.

Referring now to FIG. 9A, the augmented topology map 900 defines a plurality of spaces 902A-902E within the building that are interconnected via a plurality of access control devices 104A-104F. For example, the augmented topology map 900 includes a first space 902A, a second space 902B, a third space 902C, a fourth space 902D, and a fifth space 902E.

As described herein, respective space attribute values can be assigned to each space 902 defined by the augmented topology map 900. For example, non-transitory space attributes, such as dimensions or maximum capacity, for each space 902 can be defined by and/or represented in the augmented topology map 900 and more transitory space attributes, such as current capacity or CO2 levels, for each space 902 can be defined by and/or represented in the larger security model 716. In that regard, the augmented topology map 900 and/or the security model 716 further define one or more first space attribute values assigned to the first space 902A, one or more second space attribute values assigned to the second space 902B, one or more third space attribute values assigned to the third space 902C, one or more fourth space attribute values assigned to the fourth space 902D, and one or more fifth space attribute values assigned to fifth space 902E. During operation of the security system 100, one or more of these space attribute values can be defined and/or updated by the security model 716 implemented on the computing system 102 and/or a security device 106.

The access control devices 104A-104F are illustrated as various types of doors and/or gates that connect and restrict access between the different spaces 902A-902E defined by the augmented topology map 900. However, persons skilled in the art should understand that the access control devices 104A-104F can be implemented using one or more other types of devices. In the illustrated example of FIG. 9A, each of the access control devices 104A-104F is shown to be in an open, or unlocked, state. However, persons skilled in the art should understand that each access control device 104 can transition between an open state and a closed state in accordance with the security model 716 and PSMS 718 implemented on the computing system 102 and/or a security device 106.

The augmented topology map 900 also defines the respective locations of various security devices 106A-106D installed within the spaces 902A-902E. Although the security devices 106A-106D are illustrated as surveillance cameras, persons skilled in the art should understand that security devices 106A-106D can be implemented using one or more other types of security devices described herein.

The first space 902A is illustrated as a lobby area in the building at which the security system 100 is implemented. The first space 902A can be entered from the exterior of the building via the first access control device 104A. The first space 902A is joined with the second space 902B via the second access control device 104B and joined with the third space 902C via the third access control device 104C. As further shown, the first security device 106A is positioned within the first space 902A such that the first security device 106A can generate security data associated with the first space 902A.

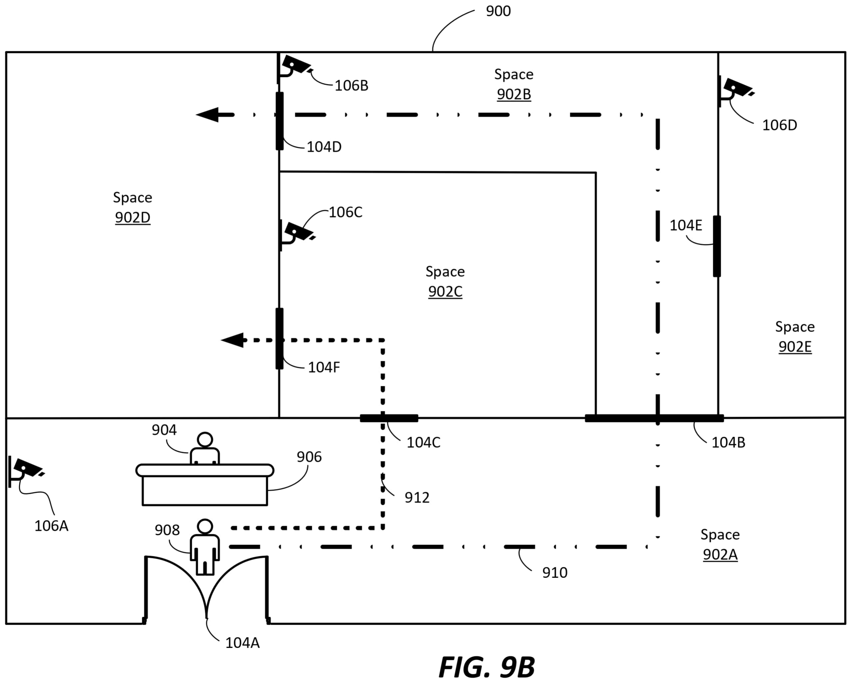

In the illustrated example of FIG. 9A, the augmented topology map 900 further shows one or more transient objects, such as the security guard object 904 and the security desk object 906, existing in the first space 902. However, it should be noted that these transient objects are shown in the augmented topology map 900 for illustrative purposes and that the augmented topology map 900 itself does not necessarily define the attribute values for these transient objects. Rather, in some cases, transient objects and their respective attributes exist and/or can be defined in the security model 716, not the augmented topology map 900. For example, the augmented topology map 900 shows a security guard object 904 that is stationed at the security desk object 906 positioned in the first space 902A. As another example, the augmented topology map 900 shows one or more object attribute values for the security guard object 904 and the security desk object 906. However, as described above, it should be noted that transient objects such as the security guard object 904 and the desk object 906 shown in FIG. 9A and the subsequent FIGS. 9B-9H are merely shown in the augmented topology map 900 for illustrative purposes.

The second space 902B, which is linked to the first space 902A via the second access control device 104B, can be used to access the fourth space 902D or the fifth space 902E. For example, an object existing in the second space 902B can access the fourth space 902D via the fourth access control device 104D or access the fifth space 902E via the fifth access control device 104E. In the illustrated example of FIGS. 9A-9D, the second space 902B is shown to be a hallway. Furthermore, the second security device 106B is positioned within the second space 902B such that the second security device 902B can generate security data associated with the second space 902B.

The third space 902C, which is linked to the first space 902A via the third access control device 104C, can be used to access the fourth space 902D via the sixth access control device 104F. In the illustrated example of FIGS. 9A-9D, the third space 902C is shown to be an interior room. Furthermore, the third security device 106C is positioned within the third space 902C such that the third security device 902C can generate security data associated with the third space 902C.

The fourth space 902D and the fifth space 902E are both shown as exterior rooms in the illustrated example of FIGS. 9A-9D. Furthermore, the fourth security device 106D is positioned within the fifth space 902E such that the fourth security device 902D can generate security data associated with the fifth space 902E.

FIG. 9B illustrates a visual representation of the augmented topology map 900 of FIG. 9A at a first point in time during operation of the security system 100, according to the present teachings. In that regard, the augmented topology map 900 shown in FIG. 9B represents the state of spaces 902A-902E in the building and/or any objects existing within the spaces 902A-902E at the first time during operation of the security system 100. In the illustrated example of FIG. 9B, each of the access control devices 104B-104F are shown to be in a closed, or locked, state. In that regard, the access control devices 104B-104F are being used to restrict access to the spaces 902B-902E at the first time during operation of the security system 100. In some examples, the closed, or locked, state of each access control device 104B-104F is stored in the security model 716 and controlled by the PSMS 718.

As further shown in FIG. 9B, the augmented topology map 900 indicates the presence of a first object 908 that is located near the security desk object 906 within the first space 902A. For example, the first object 908 is a person checking in with the security guard object 904 at a security desk object 906. In some examples, the presence of the first object 908 can be stored and/or otherwise represented in the security model 716.

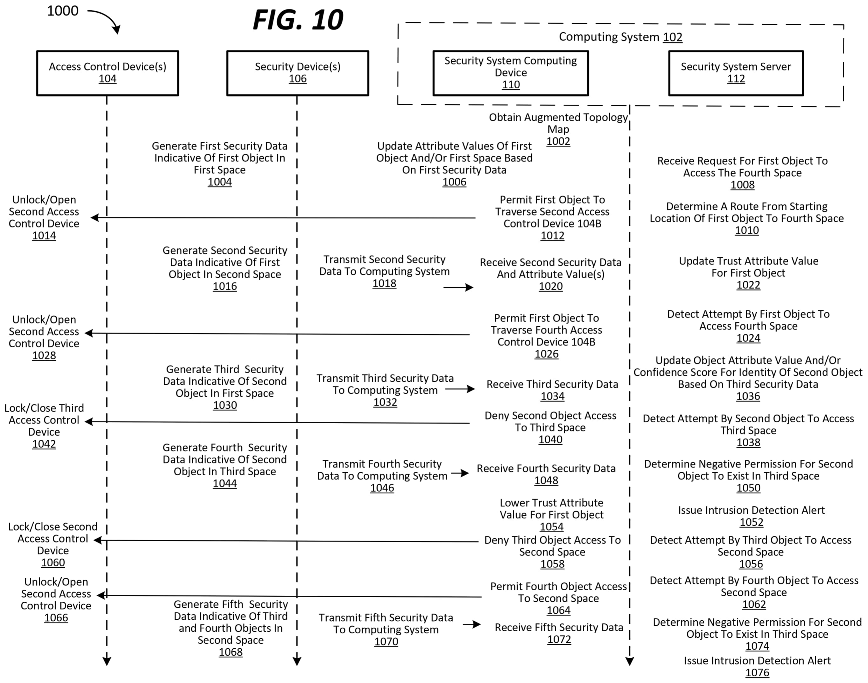

In the illustrated example of FIG. 9B, a first route 910 between the starting location of the first object 908 and the fourth space 902D is shown. The first route 910 includes traversing the second access control device 104B, the second space 902B, and the fourth access control device 104D to access the fourth space 902D. Furthermore, a second route 912 between the starting location of the first object 908 and the fourth space 902D is shown. The second route includes traversing the third access control device 104C, the third space 902C, and the sixth access control device 104F to access the fourth space 902D. The first and second routes 910, 912 will be described in more detail with respect to FIG. 10.

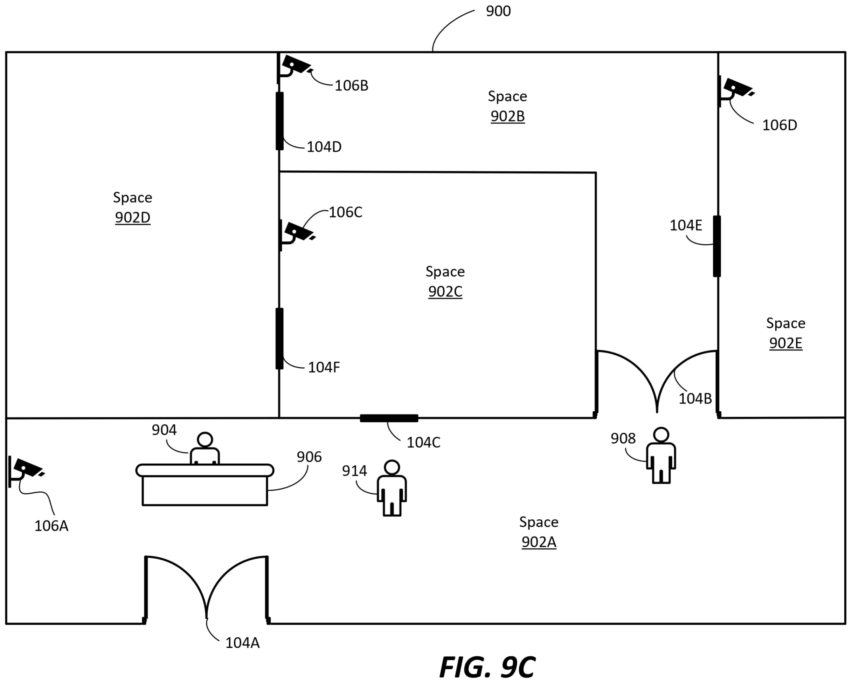

FIG. 9C illustrates a visual representation of the augmented topology map 900 of FIG. 9A at a second point in time during operation of the security system 100, according to the present teachings. In that regard, the augmented topology map 900 shown in FIG. 9C represents the state of spaces 902A-902E in the building and/or any objects existing within the spaces 902A-902E at the second time after the first time during operation of the security system 100.

In the illustrated example of FIG. 9C, the first object 908 has moved towards the second access control device 104B. Furthermore, the second access control device 104B is shown to be in an open, or unlocked, state. The second access control device 104B may have been opened, or unlocked, based in part on one or more attribute values assigned to the first object 908, a confidence score for the identity of the first object 908, compliance with a policy that defines a relationship between one or more object attribute values assigned to the first object 908 and one or more second space attribute values assigned to the second space 902B, security data generated by the first security device 106A, in response to the object 908 presenting an access card to a reader associated with the second access control device 104B and/or for some other reason in accordance with the disclosed techniques. In some examples, the PSMS 718 opens the access control device 104B.

As further shown in FIG. 9C, the augmented topology map 900 further indicates the presence of a second object 914 that is located within the first space 902A near the third access control device 104C. In the illustrated example of FIG. 9C, the second object 914 is shown to be a person. However, in other examples, the second object 914 can be some other type of object. In some examples, the presence of the first object 908 can be stored and/or otherwise represented in the security model 716.

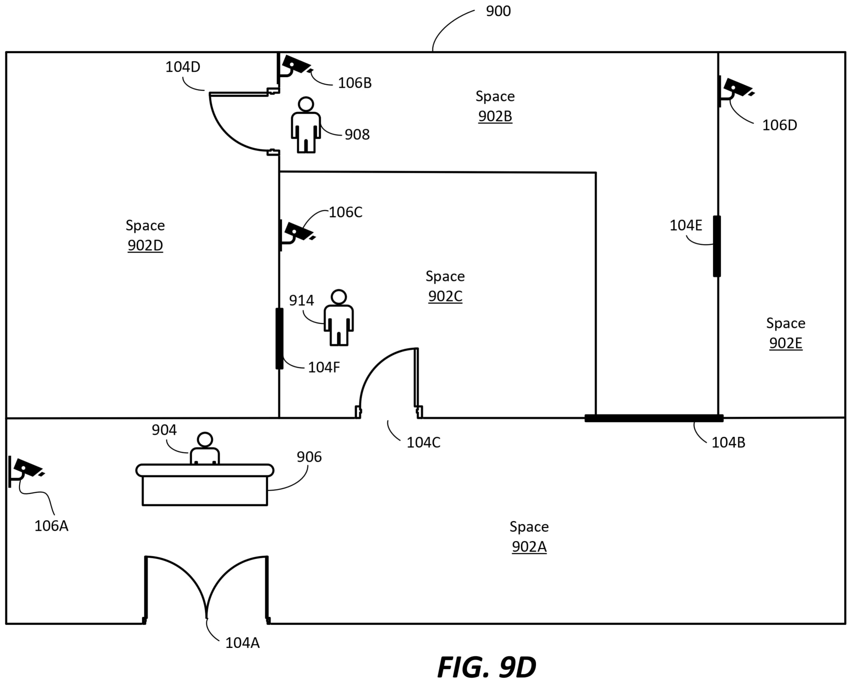

FIG. 9D illustrates a visual representation of the augmented topology map 900 of FIG. 9A at a third point in time during operation of the security system 100, according to the present teachings. In that regard, the augmented topology map 900 shown in FIG. 9D represents the state of spaces 902A-902E in the building and/or any objects existing within the spaces 902A-902E at the third time after the second time during operation of the security system 100. In the illustrated example of FIG. 9D, the first object 908 has traversed the second access control device 104B and moved through the second space 902B towards the fourth access control device 104D. Furthermore, the fourth access control device 104D is shown to be in an open, or unlocked, state. The fourth access control device 104D may have been opened, or unlocked, based in part on one or more attribute values assigned to the first object 908, a confidence score for an attribute of the first object 908 (e.g., identity confidence score), a determination that one or more object attribute values assigned to the first object 908 and one or more fourth space attribute values assigned to the fourth space 902D are in compliance with, or satisfy, one or more policies in effect, security data generated by the second security device 106B, in response to the object 908 presenting an access card to a reader associated with the fourth access control device 104D, and/or for some other reason in accordance with the disclosed techniques. In some examples, the PSMS 718 opens the fourth access control device 104D.

As further shown in FIG. 9D, the second object 914 has traversed the third access control device 104C and entered the third space 902C. In some examples, the third access control device 104C may have been opened, or unlocked, for some reason not associated with the second object 914. In such examples, the second object 914 may be existing within the third space 902C with a negative permission (e.g., without permission) at the third time during operation of the security system 100.

In other examples, the third access control device 104C may have been opened, or unlocked, based in part on one or more attribute values assigned to the second object 914, a confidence score for an attribute of the second object 914, a determination that one or more object attribute values of the second object 914 and one or more third space attribute values of the third space 902C are in compliance with, or satisfy, one or more policies in effect, security data generated by the first security device 106A, and/or for some other reason in accordance with the disclosed techniques. In such examples, the second object 914 may exist within the third space 902C with a positive permission (e.g., with permission) at the third time during operation of the security system 100.

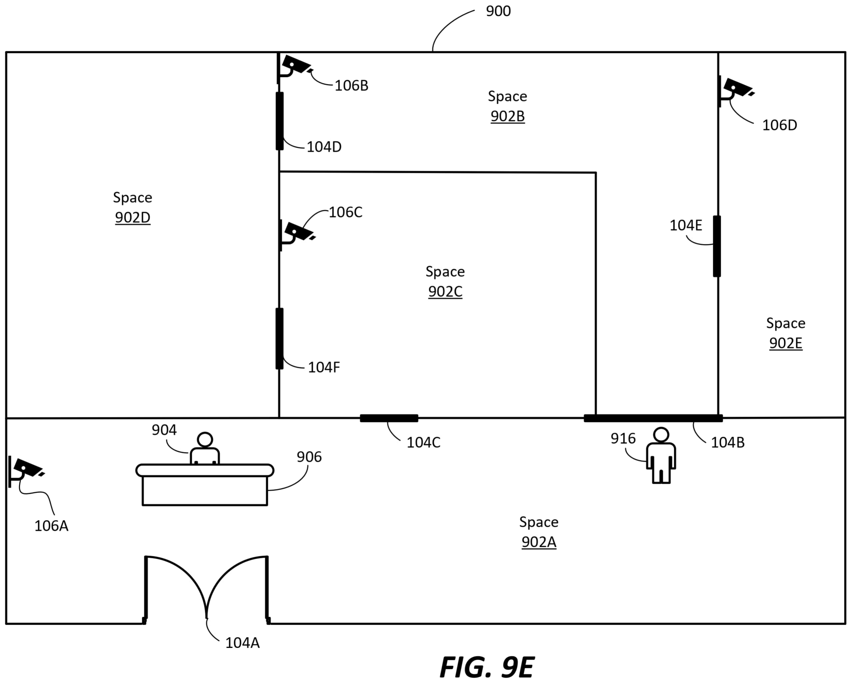

FIG. 9E illustrates a visual representation of the augmented topology map 900 of FIG. 9A at a fourth point in time during operation of the security system 100, according to the present teachings. In that regard, the augmented topology map 900 shown in FIG. 9E represents the state of spaces 902A-902E in the building and/or any objects existing within the spaces 902A-902E at the fourth time during operation of the security system 100. As shown in FIG. 9E, the augmented topology map 900 indicates the presence of a third object 916 near the second access control device 104B. For example, the third object 916 is a person attempting to access the second space 902B via the second access control device 104B. In some examples, the presence of the third object 916 can be stored and/or otherwise represented in the security model 716.

In the illustrated example of FIG. 9E, the second access control device 104B is shown to be in a closed, or locked, state. In this example, the second access control device 104B may have remained or been closed, or locked, based in part on one or more attribute values assigned to the third object 916, a confidence score for the identity of the third object 916, compliance with a policy that defines a relationship between one or more object attribute values assigned to the third object 916 and one or more space attribute values assigned to the second space 902B, security data generated by the first security device 106A, in response to the object 916 presenting an access card to a reader associated with the second access control device 104B and/or for some other reason in accordance with the disclosed techniques. In some examples, the PSMS 718 locks or closes the access control device 104B.

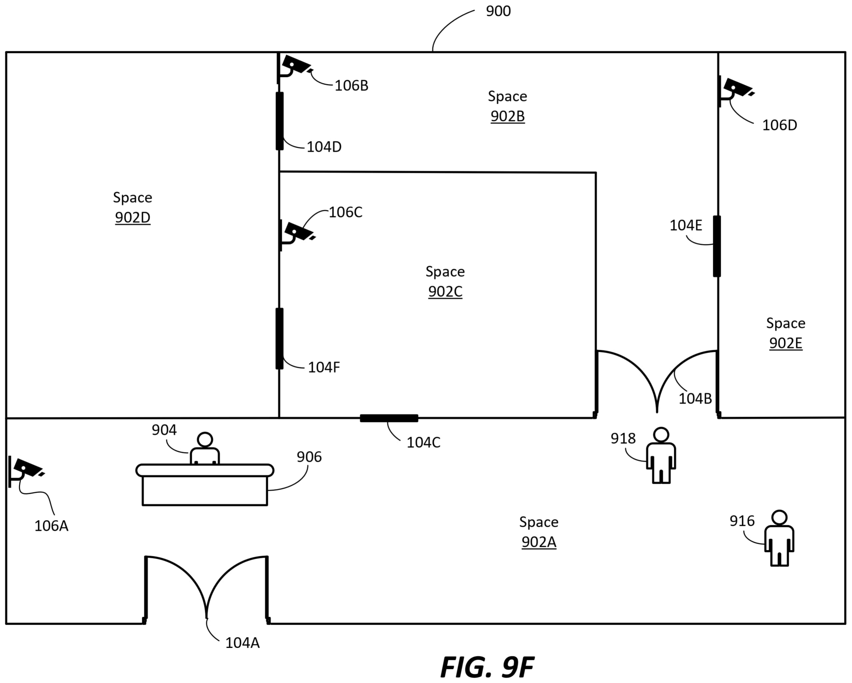

FIG. 9F illustrates a visual representation of the augmented topology map 900 of FIG. 9A at a fifth point in time during operation of the security system 100, according to the present teachings. In that regard, the augmented topology map 900 shown in FIG. 9F represents the state of spaces 902A-902E in the building and/or any objects existing within the spaces 902A-902E at the fifth time after the fourth time during operation of the security system 100. As shown in FIG. 9F, the augmented topology map 900 indicates the presence of a fourth object 918 near the second access control device 104B. For example, the fourth object 918 is a person attempting to access the second space 902B via the second access control device 104. In some examples, the presence of the fourth object 918 can be stored and/or otherwise represented in the security model 716. As also shown in FIG. 9F, the third object 916 remains located near the second access control device 104B after being denied passage through the second access control device 104B.

In the illustrated example of FIG. 9F, the second access control device 104B is shown to be in an open, or unlocked, state. The second access control device 104B may have been opened, or unlocked, based in part on one or more attribute values assigned to the fourth object 918, a confidence score for the identity of the fourth object 918, compliance with a policy that defines a relationship between one or more object attribute values assigned to the fourth object 918 and one or more second space attribute values assigned to the second space 902B, security data generated by the first security device 106A, in response to the fourth object 918 presenting an access card to a reader associated with the second access control device 104B and/or for some other reason in accordance with the disclosed techniques. In some examples, the PSMS 718 opens the access control device 104B.

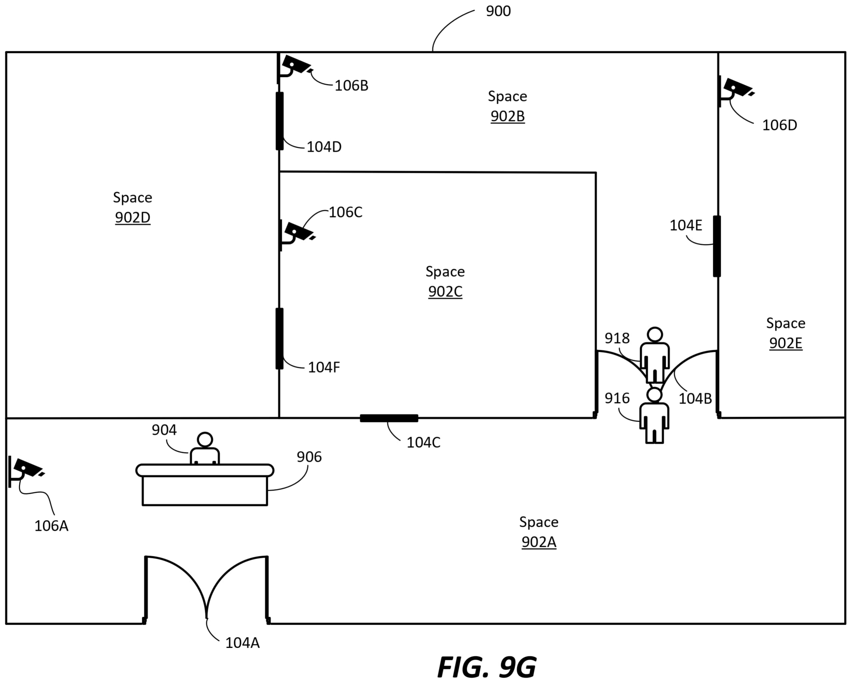

FIG. 9G illustrates a visual representation of the augmented topology map 900 of FIG. 9A at a sixth point in time during operation of the security system 100, according to the present teachings. In that regard, the augmented topology map 900 shown in FIG. 9G represents the state of spaces 902A-902E in the building and/or any objects existing within the spaces 902A-902E at the sixth time after the fifth time during operation of the security system 100.

As shown in FIG. 9G, the fourth object 918 traverses the second access control device 104B and enters the second space 902B after the second access control device 104B was opened, or unlocked, (e.g., by the PSMS 718). As further shown in FIG. 9G, the third object 916 is tailgating (e.g., following closely) behind the fourth object 918 to enter the second space 902B through the open second access control device 104B. However, as described above with respect to FIG. 9E, the third object 916 is not privileged to enter the second space 902B through the second access control device 104B. Rather, the third object 916 was denied access to the second space 902 when PSMS 718 did not unlock, or open, the second access control device 104B in the presence of the third object 916.

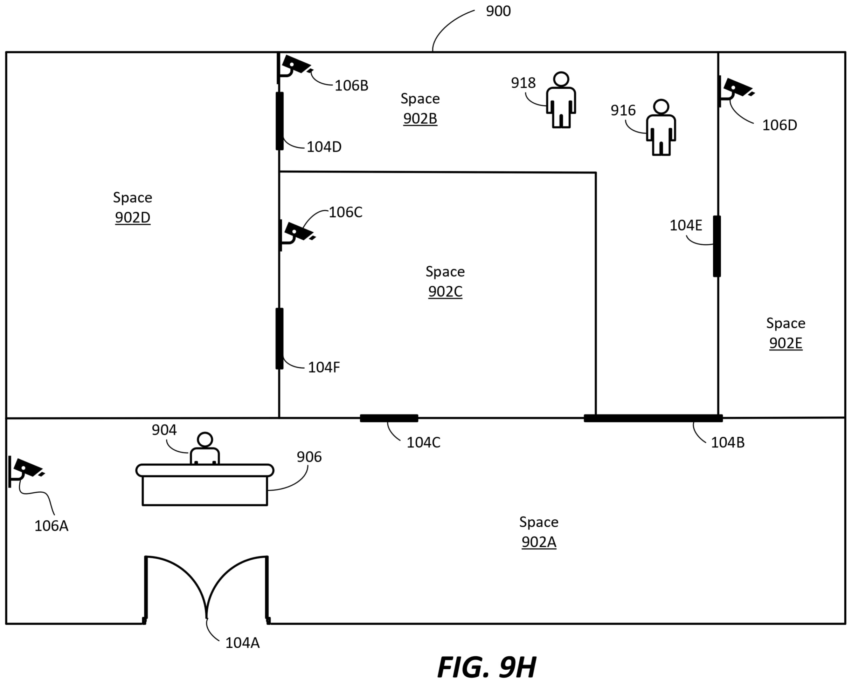

FIG. 9H illustrates a visual representation of the augmented topology map 900 of FIG. 9A at a seventh point in time during operation of the security system 100, according to the present teachings. In that regard, the augmented topology map 900 shown in FIG. 9H represents the state of spaces 902A-902E in the building and/or any objects existing within the spaces 902A-902E at the seventh time after the sixth time during operation of the security system 100. In the illustrated example of FIG. 9H, the third and fourth objects 916, 918 traversed the second access control device 104B and moved through the second space 902B to be within the field of view of the second security device 106B.

In operation, the second security device 106B generates security data that indicates the presence of the third object 916 and the fourth object 918 in the second space 902B. However, as described above, the third object 916 was not permitted to enter the second space 902B. In that regard, the PSMS 718 detects, based in part on the security data generated by the second security device 106B, a negative permission for the third object 916 to exist in the second space 902B. For example, the PSMS 718 determines, based on the detected presence of two objects in the security data, a value of an expected occupancy attribute for the second space 902B, and one or more policies in effect, that more than an expected or allowed amount of objects are present in the second space 902B. Responsive to this determination, the PSMS 718 may update an attribute value of the third object 916 (e.g., a location attribute, a risk level attribute, etc.) and/or an attribute value of the second space 902B (e.g., an occupancy attribute, a risk level attribute, etc.). In some examples, the PSMS 718 may also perform one or more additional responsive actions, such as raising an alert for the security guard object 904 to intervene and/or locking one or more additional access control device 104.

The illustrated examples of FIGS. 9A-9H will be described in more detail herein with respect to FIG. 10.

FIG. 10 illustrates an example flow diagram of a process 1000 for managing access control and intrusion detection in a security system, according to the present teachings. Although the interaction between the devices in process 1000 are shown in an order, persons skilled in the art will understand that the interactions may be performed in a different order, interactions may be repeated or skipped, and/or may be performed by components other than those described in FIG. 10. Moreover, the process 1000 may include additional interactions and/or steps that are not explicitly shown and/or described herein.

In the illustrated example of FIG. 10, the computing system 102 is shown as including a security system server 110 and a security system computing device 112. For explanatory purposes, implementation of the process 1000 will be described generally with respect to the computing system 102. In that regard, one or more of the steps described in process 1000 as being performed by the security model and/or the PSMS implemented on the computing system 102 may actually be performed by the security model 716 and/or the PSMS 718 implemented on the security system server 110 and/or the security system computing device 112.

Furthermore, in the illustrated example of FIG. 10, the plurality of access control devices 104 included the security system 100 are represented using a single icon. For example, the access control devices 104A-104F described with respect to and shown in FIGS. 9A-9H are represented by the single icon shown in FIG. 10. Similarly, in the illustrated example of FIG. 10, the plurality of security devices 106 included the security system 100 are represented using a single icon. For example, the security devices 106A-106D described with respect to and shown in FIGS. 9A-9H are represented by the single icon shown in FIG. 10.

Although the process 1000 is primarily described with respect to the illustrated examples of FIGS. 9A-9H, persons skilled in the art should understand that implantation of the process 1000 is not limited to just these examples. Rather, the description herein of process 1000 can be more generally applied to access control and intrusion detection processes performed by security systems installed at any site including any number of access control devices 104 and/or security devices 106.

Process 1000 begins at
step 1002 at which the computing system 106 obtains the augmented topology map 900. For example, the security model 716 implemented on the computing system 102 obtains the augmented topology map 900 from memory and/or from an external computing device that hosts and/or generated the augmented topology map 900. In some examples, using the security model 716, the computing system 102 generates the augmented topology map 900.

At step 1004, the first security device 106A generates first security data indicative of the first object 908 existing in the first space 902A (e.g., see FIG. 9B).

At step 1006, an object attribute value associated with the first object 908 and/or a first space attribute value associated with the first space 902A is updated based on the first security data. In some examples, the first security device 106A directly updates the object attribute value associated with the first object 908 and/or the first space attribute value associated with the first space 902A. For example, the first security device 106A implements the security model 620 and/or PSMS 622 to update the attribute value(s) of the first object 908 and/or the first space 902A. In other examples, the computing system 102 updates the object attribute value associated with the first object 908 and/or the first space attribute value associated with the first space 902A. For example, the computing system 102 uses the PSMS 718 to update the respective values of the object attribute associated with the first object 908 and/or the first space attribute associated with the first space 902A in the security model 716.

As a non-limiting example, the first security device 106A and/or the computing system 102 updates a clothing type and/or color attribute value for the first object 908. As another non-limiting example, the first security device 106A and/or the computing system 102 updates an occupancy attribute value for the first space 902A.

At step 1008, the computing system 102 receives a request for the first object 908 to access the fourth space 902D. In some examples, the computing system 102 receives the request as a user input at the security system computing device 112. For example, a security guard object 904 stationed at the security desk object 906 inputs a request for the first object 908 to access the fourth space 902D into the security system computing device 112. In some examples, the request is received by the computing system 102 implicitly in the form of security data generated by a security device 106, the security data indicating an intention of the first object 908 to access the fourth space 902D.

At step 1010, the computing system 102 determines a route from a starting location (e.g., the security desk object 906) of the first object 908 to the fourth space 902D. For example, the computing system 102 uses the security model 716 and/or the augmented topology map 900 to determine the route from the security desk object 906 to the fourth space 902D based on the respective space attribute values assigned to each space included in the plurality of spaces 902A-902E, an identity of the first object 908, and/or one or more policies that are in effect. As described herein, the identity of the first object 908 comprises one or more object attribute values that define the first object 908. In some examples, the computing system 102 further determines the route based in part on a confidence score for the identity of the first object 908 and/or a confidence score for some other attribute of the first object 908.

In some examples, in determining the route from the security desk object 906 to the fourth space 902D, the computing system 102 identifies one or more candidate routes, such as the first route 910 and the second route 912, and selects a route from the candidate routes along which the first object 908 is permitted to transit. As shown in FIG. 9B, first route 910 includes traversing the second access control device 104B, the second space 902B, and the fourth access control device 104D to access the fourth space 902D and the second route 912 includes traversing the third access control device 104C, the third space 902C, and the sixth access control device 104F to access the fourth space 902D.

In evaluating whether to select the first route 910 or the second route 912, the computing system 102 determines whether the object attribute values for the first object 908 and corresponding space attribute values of the spaces along the first and second routes 910, 912 through which the first object 908 must transit are in compliance with one or more policies in effect. In one non-limiting example, the computing system 102 determines whether a clearance level attribute value assigned to the first object 908 to and the clearance level attribute value assigned to the second space 902B included in the first route 910 are in compliance with one or more clearance level policies in effect. Further in this non-limiting example, the computing system 102 determines whether a clearance level attribute value assigned to the first object and a clearance level attribute value assigned to the third space 902C included in the second route 912 are in compliance with one or more clearance level policies in effect.

In this non-limiting example, the clearance level attribute value assigned to the first object 908 is "medium," the clearance level attribute value assigned to the second space 902B is "low," and the clearance level attribute value assigned to the third space 902C is "high." In that regard, in evaluating the candidate routes 910, 912, the computing system 102 determines that the medium clearance level attribute value for the first object 908 and the high clearance level attribute value for the third space 902C are not in compliance with the policy in effect because the policy stipulates that objects having a medium clearance level attribute or lower are restricted from entering spaces having a clearance level attribute value that is higher than "medium" (e.g., high, very high, etc.). Therefore, the computing system 102 does not select the second route 912 because the first object 908 is not permitted to transit through the third space 902C.

However, further in evaluating the candidate routes 910, 912, the computing system 102 determines that the medium clearance level attribute value for the first object 908 and the low clearance level attribute value for the second space 902B are in compliance with the policy in effect because the policy stipulates that objects having a low clearance level attribute or higher (e.g., medium, high, very high, etc.) are permitted to enter spaces having a clearance level attribute value that is equal to or lesser than "low" (e.g., low, very low, etc.). Therefore, the computing system 102 selects the first route 910 for the first object 908 to traverse from the security desk object 906 to the fourth space 902D because the first object 908 is permitted to transit through the second space 902B. In some examples, the computing system 102 displays the first route 910 on the augmented topology map 900 via a display device.

At step 1012, the computing system 102 determines to permit the first object 908 to traverse the second access control device 104B. For example, the computing system 102 determines to allow the first object 908 to enter the second space 902B via the second access control device 104B based in part on the policy compliance of the attribute values for the first object 908 and the second space 902B and/or a confidence score for an identity or some other attribute of the first object 908.

At step 1014, the second access control device 104B is unlocked, or opened, for the first object 908 (e.g., see FIG. 9C) to enter the second space 902B. For example, the second access control device 104B receives configuration parameters and/or instructions from the computing system 102 and, based on the configuration parameters and/or instructions, opens for the first object 908. In some examples, the computing system 102 uses the PSMS 718 to unlock, or open, the second access control device 104B.

At step 1016, the second security device 106B generates second security data indicative of the first object 908 existing in the second space 902B (e.g., see FIG. 9D). At step 1018, the second security device 106B transmits the second security data to the computing system 102.

At step 1020, the computing system 102 receives the second security data and updates, based in part on the second security data, one or more attribute values for the first object 908, the first space 902A, and/or the second space 902B. For example, the respective occupancy attribute values assigned to the first and second spaces 902A, 902B are updated within the security model 716 based on the detected presence of the first object 908 in the second space 902B. In some examples, computing system 102 uses the PSMS 718 to update the attribute values within the security model 716.

At step 1022, the computing system 102 updates a trust attribute value for the first object 908. For example, in accordance with one or more policies in effect, the computing system 102 increases the trust attribute value assigned to the first object 908 as a result of the first object 908 being detected by the second security device 106B within the second space 902B. In some examples, the more frequently an object is detected to exist within spaces the object is permitted to exist, the trust attribute value for that object is increased. In some examples, the computing system 102 uses the PSMS 718 to update, within the security model 716, the trust attribute value assigned to the first object 908.

At step 1024, the computing system 102 detects an attempt by the first object 908 to access the fourth space 902D. For example, the computing system 102 detects the attempt implicitly by discerning from the second security data that the first object 908 is attempting to enter the fourth space 902D. As another example, the computing system 102 detects the attempt in response to a badge associated with the first object 908 being scanned near the fourth access control device 104D. In some examples, badge scan attempts are detected by the PSMS 718 implemented by the computing system 102.

At step 1026, the computing system 102 determines to permit the first object 908 to traverse the fourth access control device 104D to enter the fourth space 902D. For example, the PSMS 718 implemented on computing system 102 determines to allow the first object 908 to enter the fourth space 902D via the fourth access control device 104D based in part on determining that attribute values of the first object 908 and the fourth space 902D are in compliance with one or more policies in effect, a confidence score for an identity or other attribute of the first object 908 being in compliance with one or more policies in effect, and/or the trust attribute value assigned to the first object 908 exceeding a threshold.

At step 1028, the fourth access control device 104D is unlocked, or opened, for the first object 908 (e.g., see FIG. 9D) to enter the fourth space 902D. For example, the fourth access control device 104D receives configuration parameters and/or instructions from the computing system 102 and, based on the configuration parameters and/or instructions, opens for the first object 908. In some examples, the computing system 102 uses the PSMS 718 to unlock, or open, the fourth access control device 104D.

At step 1030, the first security device 106A generates third security data indicative of the second object 914 existing in the first space 902A (e.g., see FIG. 9C). At step 1032, the first security device 106A transmits the third security data to the computing system 102.

At step 1034, the computing system 102 receives the third security data. At step 1036, the computing system 102 updates, based in part on the third security data, an object attribute value for the second object 914 and/or a confidence score for the identity or some other attribute of the second object 914. For example, the computing system 102 determines, based on the third security data, that the second object 914 is dressed in a trench coat and a hat. In that regard, the computing updates, within the security model 716, an attire attribute value for the second object 914 and reduces a confidence score for the identity second object 914, as the trench coat and hat reduce the likelihood of the detected identity of the second object 914 matching an actual identity of the second object 914. Furthermore, the computing system 102 may lower, within security model 716, the clearance level attribute value assigned to the second object 914 to "low."

At step 1038, the computing system 102 detects an attempt by the second object 914 to access the third space 902C. For example, the computing system 102 detects the attempt implicitly by discerning from the third security data that the second object 914 is attempting to enter the third space 902C. As another example, the computing system 102 detects the attempt in response to a password being entered into an electronic door lock associated with the third access control device 104C. In some examples, the PSMS 718 detects the attempt by the second object 914 to access the third space 902C.

At step 1040, the computing system 102 determines to deny the second object 914 access to the third space 902C. For example, the PSMS 718 implemented on computing system 102 determines to prevent the second object 914 from entering the third space 902C via the third access control device 104C based in part on the clearance level attribute value (e.g., low) assigned to the second object 914 and the clearance level attribute value (e.g., high) assigned to the third space 902C not being in compliance with a policy in effect, a confidence score for the identity or other attribute of the second object 914 not being in compliance with a policy in effect, and/or the trust attribute value assigned to the second object 914 being less than a threshold.

At step 1042, the third access control device 104C remains locked, or closed, to prevent the second object 914 from entering the third space 902C (e.g. see FIG. 9C). For example, the PSMS 718 determines to maintain the third access control device 104C in a locked, or closed, state.

At step 1044, the third security device 106C generates fourth security data indicative of the second object 914 existing in the third space 902C (e.g., see FIG. 9D). At step 1046, the third security device 106C transmits the fourth security data to the computing system 102.

At step 1048, the computing system 102 receives the fourth security data. At step 1050, the computing system 102 determines a negative permission for the second object 914 to exist in the third space 902C (e.g., determines that the second object 914 is not permitted to exist in the third space 902C). For example, the PSMS 718 implemented on the computing system 102 determines the negative permission for the second object 914 to exist in the third space 902C based in part on one or more of the clearance level attribute value (e.g., low) assigned to the second object 914 and the clearance level attribute value (e.g., high) assigned to the third space 902C not being in compliance with a policy in effect, the value of expected occupancy attribute of the third space 902C being set to zero in the security model 716, a confidence score for the identity or other attribute of the second object 914 not being in a compliance with a policy in effect (e.g., being less than a threshold), and/or the trust attribute value assigned to the second object 914 being less than a threshold. In some examples, third security device 106C can directly determine the negative permission for the second object 914 to exist in the third space 902C (e.g., via security model 620 and/or PSMS 622).

At step 1052, the computing system 102 issues an intrusion detection alert in response to determining the negative permission for the second object 914 to exist in the third space 902C. In some examples, issuing an intrusion detection alert includes causing display of an alert indicative of an intrusion event on a display of the security system computing device 112. In some examples, issuing an intrusion detection alert includes causing the display of a security data feed generated by the third security device 106C on a display of the security system computing device 112. In some examples, issuing an intrusion detection alert includes transmitting a message indicative of an intrusion event to one or more computing devices associated with operators of the security system 100.

In some examples, in response to the intrusion detection, the PSMS 718 implemented on the computing system 102 may open and/or close various access control devices 104 located near the intrusion event to direct traffic away from the intrusion event and/or contain the intrusion event.

At step 1054, the computing system 1054 lowers the trust attribute value assigned to the first object 908. For example, the PSMS 718 lowers the trust attribute value assigned to the first object 908 within the security model 716 in response to determining that the first object 908 has not been detected by a security device 106 for a predetermined amount of time.

At step 1056, the computing system 102 detects an attempt by the third object 916 to access the second space 902B (e.g., see FIG. 9E). For example, the computing system 102 detects an attempted badge swipe at an electronic badge reader associated with the second access control device 104B. In some examples, the PSMS 718 detects the attempt by the third object 916 to access the second space 902B.

At step 1058, the computing system 102 determines to deny the third object 916 access to the second space 902B. For example, the PSMS 718 implemented on computing system 102 determines to prevent the third object 916 from entering the second space 902B via the second access control device 104B based in part on a confidence level for the identity of the third object 916 being less than a threshold and/or user credentials associated with the badge of the third object 916 indicating that the third object 916 is not permitted to enter the second space 902B.

At step 1060, the second access control device 104B remains locked, or closed, to prevent the third object 916 from entering the second space 902B (e.g. see FIG. 9B). For example, the PSMS 718 determines to maintain the second access control device 104B in a locked, or closed, state.

At step 1062, the computing system 102 detects an attempt by a fourth object 918 to access the second space 902B (e.g., see FIG. 9F). For example, the computing system 102 detects the attempt in response to a badge associated with the fourth object 918 being scanned near the second access control device 104B. In some examples, badge scan attempts are detected by the PSMS 718 implemented by the computing system 102.

At step 1064, the computing system 102 determines to permit the fourth object 918 to traverse the second access control device 104B to enter the second space 902B. For example, the PSMS 718 implemented on computing system 102 determines to allow the first object 908 to enter the second space 902B via the second access control device 104B based in part on a confidence score for an identity or other attribute the fourth object 918 exceeding a threshold. As another example, the PSMS 718 implemented on computing system 102 determines to allow the first object 908 to enter the second space 902B via the second access control device 104B based in part on user credentials associated with the badge of the fourth object 918 indicating that the fourth object 918 is permitted to enter the second space 902B.

At step 1066, the second access control device 104B is unlocked, or opened, for the fourth object 918 (e.g., see FIG. 9F) to enter the second space 902B. For example, the PSMS 718 determines unlocks, or opens, the second access control device 104B.

At step 1068, the second security device 106B generates fifth security data indicative of the third and fourth objects 916, 918 existing in the second space 902C (e.g., see FIG. 9H). The third object 916 exists in the second space 902C, for example, after closely following (e.g., tailgating) the fourth object 918 through the second access control device 104B.

At step 1070, the second security device 106B transmits the fifth security data to the computing system 102. At step 1072, the computing system 102 receives the fifth security data.

At step 1074, the computing system 102 determines a negative permission for the third object 916 to exist in the second space 902B (e.g., determines that the third object 916 is not permitted to exist in the second space 902B). For example, the PSMS 718 implemented on the computing system 102 determines the negative permission for the third object 906 to exist in the second space 902B based in part on the third and fourth objects 916, 918 existing in the second space 902B exceeding an expected occupancy attribute value for the second space 902B.

At step 1076, the computing system 102 issues an intrusion detection alert in response to determining the negative permission for the third object 916 to exist in the second space 902B. In some examples, the computing system 102 also modifies one or more attribute values of the third object 916, the fourth object 918, or the second space 902B in response to determining the negative permission for the third object 916 to exist in the second space 902B.

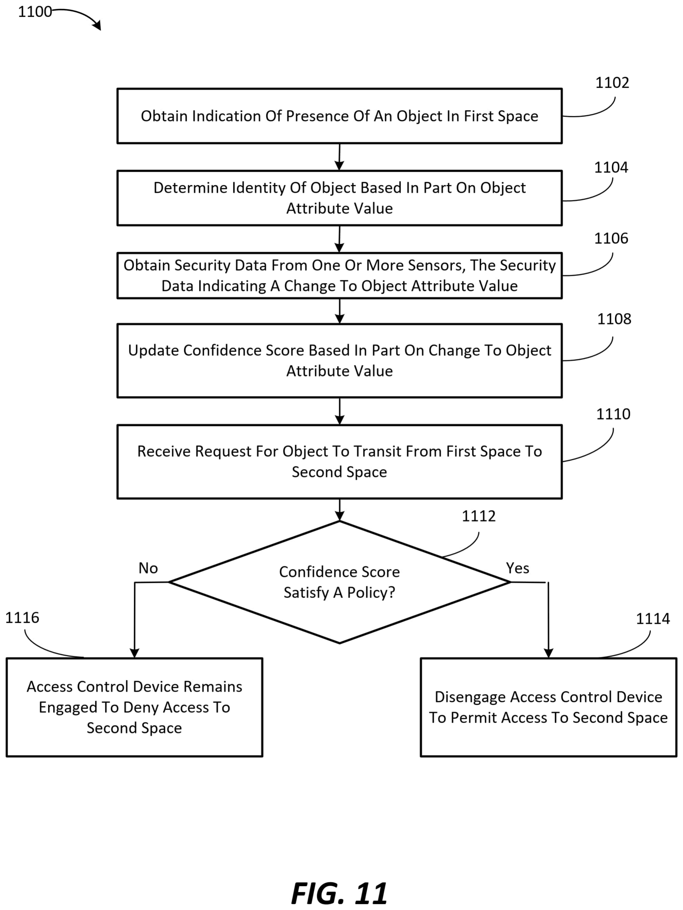

FIG. 11 is a flow diagram of method steps for managing access control with a security system, according to the present teachings. Although the method steps are described with reference to the system of FIGS. 1-10, persons skilled in the art will understand that any system adapted to implement the method steps, in any order, falls within the scope of the present invention.

As shown, a method 1100 begins at step 1102, at which an indication of a presence of an object within a first space of plurality of spaces being monitored is obtained. For example, the computing system 102 is adapted to obtain, from security data generated by one or more security devices 106, an indication of a presence of an object within a first space at the site being monitored by the security system 100. The plurality of spaces is defined, for example, in an augmented topology map (e.g., augmented topology map 900) of the site. As another example, an indication of a presence of the object within the first space is obtained when the object attempts to transit past an access control device 104 (e.g., attempt a badge swipe, enter credentials, etc.). In some examples, the indication of the present of the object within the first space as provided as an input (e.g., by a security guard) into the security system computing device 112.

At step 1104, an identity of the object is determined based in part on at least one object attribute value associated with the object. For example, the computing system 102 is adapted to determine the identity of the object based in part on at least one object attribute value (e.g., height attribute value, clothing attribute value, size attribute value, business purpose attribute value, facial scan attribute value, etc.) associated with the object. As described herein, the confidence score for an identity is indicative of a degree of certainty that the identity of the object correctly corresponds to the object. For example, a confidence score can be a representation of how likely a given candidate identity, as observed by a security device 106 and/or inferred by the computing system 102, is to correspond to reality.

In some examples, the confidence score can be single value, such as a percentage value (e.g., 95% certain the identity of this object is John Doe). In other examples, the confidence score can be a statistical model showing a probability distribution of possible identities for the object (e.g., 70% certain the identity of the object is John Doe, 25% certain the identity of the object is John Smith, 4.5% certain the identity of the object is John Jones, and 0.5% certain the identity of the object is Jack Doe). In such examples, the sum of the probabilities for each possible identity of the object would add up to 100%.

In some examples, in determining a confidence score for an identity of an object (e.g., by the security model and/or the PSMS), more than just a determination as to how likely the identity of the object is a particular candidate identity (e.g., person) is taken into account. For example, in determining a confidence score for an identity of an object, the respective likelihoods of each candidate identity for the identity of the object can be compared to one another. For example, the likelihood that the identity of the object is person A can be compared to the likelihood that the identity of the object is person B. Then, a determination regarding the confidence score for the identity of the object can be made based on the distance, or difference, between the respective likelihoods of the candidate identities. For example, assuming that the person A has a higher likelihood of being the identity of the object than person B, the greater the distance numerically (e.g., or percentagewise) between the likelihood that person A is the identity and the likelihood that person B is the identity, the higher the confidence score for person A being the identity of the object. Likewise, still assuming that the person A has a higher likelihood of being the identity of the object than person B, the smaller the distance numerically (e.g., or percentagewise) between the likelihood that person A is the identity and the likelihood that person B is the identity, the lower the confidence score for person A being the identity of the object.

In some examples, the confidence score for a particular attribute can vary with time (e.g., decreases over time). In some examples, the confidence score for an attribute can be combined with a time value (e.g., a timestamp), where the value attributed to the confidence score varies as a function of its age (e.g., the time value becomes older). In such examples, the confidence score itself may not be evaluated when making access control decisions in the security system, but rather the value derived using the confidence score. In some examples, the confidence score is determined based on a function of a time at which the confidence score was last determined and a value of the confidence score determined at that time.

In some examples, confidence scores for attributes can be compared to thresholds when making an access control decision. For example, when the confidence score for an identity of an object exceeds a threshold, the object may be granted permission and/or access. However, when the confidence score for an identity of the object is less than a threshold, the object may be denied permission and/or access. In some examples, the confidence score for an attribute isn't compared to a threshold when making an access control decision. Rather, in such examples, the confidence score is evaluated using one or more formulations and/or rules to make an access control decision. In some examples, the computing system 102 is adapted to decrease the confidence score when a first candidate identity has a first percentage chance of actually being the identity of the object and a second candidate identity has a second percentage chance of actually being the identity of the object, and a difference between the first percentage chance and the second percentage chance is less than a threshold.

At step 1106, security data from one or more sensors monitoring the site is obtained. For example, the computing system 102 obtains security data from one or more security devices 106 (e.g., security cameras, motion sensors, microphones, person counters, etc.). The security data is indicative of a change to the at least one object attribute value associated with the object. The change to the at least one object attribute value can be, for example, a change to an existing object attribute value (e.g., a change to a clothing attribute), a determination of an attribute for a new attribute associated with the object (e.g., a value for a voice attribute detected in the security data, a value for a facial covering attribute when the security data indicates a new hat or sunglasses being worn by the object, etc.), or a determination of a new value for an existing attribute (e.g., a new, second value for a clothing attribute associated with the object). The object attribute value can be formatted as one or more of an integer, a vector, a matrix, or a data pair including multidimensional data.

At step 1108, the confidence score for the identity of the object is updated based in part on the change to the at least one object attribute value. For example, the computing system 102 uses the security model 716 and/or the PSMS 718 to increase or decrease depending on the nature of the change to the at least one object attribute value. As a first non-limiting example, the computing system 102 increases the confidence score when the change to the at least one object attribute value is associated with the voice of the object being detected. As another non-limiting example, the computing system 102 decreases the confidence score when the change to the at least one object attribute value is associated with the object putting on a pair of sunglasses or a hat.

At step 1110, a request for the object to transit from the first space to a second space is received. In examples, the computing system 102 receives the request as a user input at the security system computing device 112. For example, an operator of the security system computing device 112 inputs a request for the object to access the first space. In some examples, the request is received by the computing system 102 implicitly in the form of security data generated by a security device 106, the security data indicating an intention of the object to access the first space. For example, when a security device 106 implemented as a wireless badge reader reads someone's badge, the security data generated by the security device 106 in response to the reading indicates an intention of the person to access the first space.

At step 1112, it is determined whether the confidence score is in compliance with a policy in effect at the site. For example, the computing system 102 determines whether the confidence score for the identity of the object is in compliance with the policy. In some examples, the policy defines a confidence score threshold and determining whether the confidence score is in compliance with the policy includes comparing the confidence score to the threshold (e.g., the confidence score is in compliance when the confidence score exceeds the threshold, the confidence score is not in compliance when the confidence score does not exceed the threshold, etc.). In some examples, the policy specifies a minimum difference between a first likelihood of the object having a first candidate identity and a second likelihood of the object having a second candidate identity. In such examples, the confidence score is in compliance with the policy when the difference between the first likelihood of the object having the first candidate identity and the second likelihood of the object having the second candidate identity exceeds the minimum difference. In contrast, the confidence score is not in compliance with the policy when the difference between the first likelihood of the object having the first candidate identity and the second likelihood of the object having the second candidate identity is less than minimum difference. In other examples, one or more formulas and/or algorithms can be used to determine whether a confidence score is in compliance with a policy.

If, at step 1112, it is determined that the confidence score is in compliance with the policy in effect at the site (e.g., YES), the method proceeds to step 1114 where an access control device 104 mediating transit from the first space to the second space is actuated to permit the object to enter the second space. For example, the computing system 102 uses the PSMS 718 to disengage, or unlock, the access control device 104 to enable the object to enter the second space. In some examples, the access control device 104 displays a visual effect to indicate that the object was granted access to the second space.

However, if at step 1112 it is determined that the confidence score is in not compliance with the policy in effect at the site (e.g., NO), the method proceeds to step 1116 where an access control device 104 mediating transit from the first space to the second space remains engaged, or locked, to prevent the object from entering the second space. For example, the computing system 102 uses the PSMS 718 to keep the access control device 104 in a locked state to prevent the object from entering the second space. In some examples, the access control device 104 displays a visual effect to indicate that the object was denied access to the second space.

In some examples, the computing system 102 is further adapted to cause a particular sensor (e.g., a particular security device 106 and/or sensor associated with an access control device 104) to obtain additional access control information in response to determining that the confidence score is not in compliance with the policy. For example, the computing system 102 causes the particular sensor to prompt the object to perform an access control validation act, such as providing user credentials, swiping a badge, performing a facial recognition scan, providing a thumbprint scan, speaking into a microphone, etc. In some examples, the computing system 102 prompts the object using one or more visual, audio, or tactile signals.

In some examples, in response to receiving the request for the object to transit from the first space to the second space at step 1110, the computing system 102 instead actuates a separate access control device 104 that mediates transit from the first space to a third space. For example, the computing system 102 actuates the separate access control device 104 based in part on an evaluation of the confidence score with respect to a second policy, different than the policy at step 1112, associated with the third space.
1. According to some embodiments, a security system managing access to a site. The security system comprising a computing system adapted to obtain an augmented topology map of the site, the augmented topology map defining a plurality of spaces included in the site; the computing system adapted to identify respective space attribute values for each space included in the plurality of spaces; the computing system adapted to receive a request for an object to access a first space included in the plurality of spaces; the computing system adapted to determine a route from a starting location of the object to the first space based in part on the respective space attribute values identified for each space included in the plurality of spaces and an identity of the object, the route including at least one monitoring device disposed between the starting location and the first space; and the computing system adapted to permit the object to traverse the route monitored by the at least one monitoring device based in part on the identity of the object.
2. The security system according to clause 1, wherein to determine the route, the computing system is adapted to identify at least one second space in the plurality of spaces through which the object is permitted to transit; and the computing system adapted to add the at least one second space to the route.
3. The security system according to clause 1 or clause 2, wherein the identity of the object comprises one or more object attribute values that define the object; and to identify the at least one second space in the plurality of spaces through which the object is permitted to transit, the computing system is adapted to compare the object attribute values to the respective space attribute values identified for each space included in the plurality of spaces; and the computing system adapted to determine, based on the comparison of the object attribute values to the respective space attribute values, that transiting through the at least one second space is in compliance with one or more active policies associated with the site.
4. The security system according to any of clauses 1-3, wherein to determine the route, the computing system is adapted to identify at least one third space in the plurality of spaces through which the object is not permitted to transit; and the computing system adapted to determine not to add the at least one third space the route.
5. The security system according to any of clauses 1-4, wherein the identity of the object comprises one or more object attribute values that define the object; and to identify the at least one third space in the plurality of spaces through which the object is not permitted to transit, the computing system is adapted to compare the object attribute values to the respective space attribute values identified for each space included in the plurality of spaces; and the computing system adapted to determine, based on the comparison of the object attribute values to the respective space attribute values, that transiting through the at least one second space is not in compliance with one or more active policies associated with the site.
6. The security system according to any of clauses 1-5, wherein the object attribute values comprise a first clearance level value, the respective space attributes identified for the at least second space comprise a second clearance level value, and the respective space attributes identified for the at least third space comprise a third clearance level attribute; wherein the first clearance level value is in compliance with one or more policies associated with the at least second space and wherein the first clearance level value is not in compliance with one or more active policies associated with the at least third space.
7. The security system according to any of clauses 1-6, wherein to permit the object to traverse the route, the computing system is adapted to push configuration parameters to one or more access control devices included in the security system; and wherein at least one access control device included in the one or more access control devices is disposed on the route and adapted to permit the object to transit past the at least one access control device based in part on the configuration parameters.
8. The security system according to any of clauses 1-7, wherein to permit the object to traverse the route, the computing system is adapted to unlock an access control device that is disposed along the route; wherein the access control device includes an electronic door lock included in the security system.
9. The security system according to any of clauses 1-8, wherein to determine the route from the starting location to the first space, the computing system is adapted to identify a plurality of routes through the site between the starting location of the object and the first space, the plurality of routes including the route; wherein a second route included in the plurality of routes comprises passage through a second space; wherein the identity of the object comprises one or more object attribute values that define the object that are not in compliance with one or more active policies associated with the second space; and wherein the computing system is adapted to select the route instead of the second route based in part on the one or more active policies associated with the second space.
10. The security system according to any of clauses 1-9, wherein the computing system is adapted to display, via a display device, the route on the augmented topology map; and wherein the computing system is adapted to store, via a database, the route in association with the identity of the object.
11. According to some embodiments, a method comprising obtaining an augmented topology map of a site, the augmented topology map defining a plurality of spaces in the site; identifying respective space attribute values for each space included in the plurality of spaces; receiving a request for an object to access a first space included in the plurality of spaces; determining a route from a starting location of the object to the first space based in part on the respective space attribute values identified for each space included in the plurality of spaces and an identity of the object, the route including at least one security device disposed between the starting location and the first space; and permitting the object to traverse the route monitored by the at least one security device based in part on the identity of the object.
12. According to some embodiments, a security system managing access to a site comprising a plurality of access control devices adapted to restrict access to a plurality of spaces included in the site and a computing system including one or more processors in electronic communication with the plurality of access control devices via a network. The computing system adapted to obtain an augmented topology map, the augmented topology map defining the plurality of spaces in the site; the computing system adapted to receive a request for an object to access a first space included in the plurality of spaces; the computing system adapted to determine an object attribute value associated with the object; the computing system adapted to identify, based in part on the augmented topology map and the object attribute value, a second space included in the plurality of spaces through which the object is allowed to transit, the second space disposed between the first space and a starting location of the object; and the computing system adapted to enable, via at least one access control device included in the plurality of access control devices, the object to enter the second space.
13. The security system according to clause 12, wherein the object is a person; and wherein the object attribute value indicates at least one of a business purpose associated with the person or a security clearance level associated with the person.
14. The security system according to clause 12 or clause 13, wherein the at least one access control device comprises an electronic door lock adapted to restrict access to the second space via a door; and to enable the object to enter the second space, the computing system is adapted to unlock the electronic door lock.
15. The security system according to any of clauses 12-14, wherein the computing system is adapted to identify, based in part on the augmented topology map and the object attribute value, a third space included in the plurality of spaces through which the object is not allowed to transit, the third space disposed between the first space and a starting location of the object; and the computing system adapted to prevent, via at least one second access control device included in the plurality of access control devices, the object from entering the third space.
16. The security system according to any of clauses 12-15, wherein the at least one second access control device comprises an electronic door lock adapted to restrict access to the third space via a door; and to prevent the object from entering the third space, the computing system is adapted to activate the electronic door lock.
17. The security system according to any of clauses 12-16, wherein the computing system is adapted to generate a route between the object and the first space; wherein the route includes passage through the second space and avoids passage through the third space.
18. The security system according to any of clauses 12-17, further comprising one or more security devices adapted to generate security data associated with the site, the one or more security devices in electronic communication with the computing system via the network; the computing system adapted to receive first security data from a first security device included in the one or more security devices; the computing system adapted to detect, based on the first security data, that the object has attempted to enter the third space a number of times that exceeds a threshold; and responsive to detecting that the object has attempted to enter the third space the number of times that exceeds the threshold, the computing system adapted to modify a trust attribute value associated with the object.
19. The security system according to any of clauses 12-18, wherein the computing system is adapted to restrict access of the object to the second space based in part on the modified trust attribute value associated with the object.
20. According to some embodiments, a method comprising obtaining an augmented topology map, the augmented topology map defining a plurality of spaces included in a site; receiving a request for an object to access a first space included in the plurality of spaces; determining an object attribute value associated with the object; identifying, based in part on the augmented topology map and the object attribute value, a second space included in the plurality of spaces through which the object is allowed to transit, the second space disposed between the first space and a starting location of the object; and enabling, via at least one access control device included in the plurality of access control devices, the object to enter the second space.
21. According to some embodiments, a security system managing access to a site that includes a plurality of spaces comprising at least one security device adapted to generate security data associated with a first space included in the plurality of spaces and a computing system including one or more processors in electronic communication with the at least one security device via a network. The computing system adapted to obtain an augmented topology map of the site, the augmented topology map comprising a data structure that defines the plurality of spaces in the site; the computing system adapted to implement a security model associated with the site, the security model comprising a data structure that defines space attribute values associated with each space in the plurality of spaces, a plurality of objects existing within the plurality of spaces, and object attribute values assigned to each object included in the plurality of objects; the computing system adapted to receive the security data from the at least one security device, the security data indicative of a first object included in the plurality of objects existing in the first space included in the plurality of spaces; the computing system adapted to update, based on the security data, at least one of a first object attribute value associated with the first object and a first space attribute value associated with the first space; determine, based in part on the at least one of the first object attribute value and the first space attribute value, a permission of the first object to exist in the first space; and responsive to determining a negative permission for the first object to exist in the first space, the computing system adapted to update an attribute value associated with the first object to indicate an anomalous presence of the first object.
22. The security system according to clause 21, wherein the at least one security device is adapted to generate second security data associated with a second object included in the plurality of objects, the second object existing in the first space; the at least one security device adapted to update, based in part on the second security data, at least one object attribute value assigned to the second object; the at least one security device adapted to transmit, to the computing system, the at least one object attribute value assigned to the second object; and the computing system adapted to update the security model based on the at least one object attribute value assigned to the second object.
23. The security system according to clause 21 or clause 22, wherein the computing system is adapted to determine a confidence score for an identity of the first object based in part on the first object attribute value and at least one additional object attribute value associated with the first object; wherein the confidence score for the first object indicates how likely a detected identity of the first object matches an actual identity of the first object; wherein an actual identity of the first object comprises a plurality of object attribute values that define the first object.
24. The security system according to any of clauses 21-23, wherein to update, based on the security data, the first object attribute value, the computing system is adapted to detect an updated value of the first object attribute value in the security data.
25. The security system according to any of clauses 21-24, wherein the computing system is adapted to determine an updated confidence score for the updated value of the first object attribute value detected in the security data; and wherein the updated confidence score indicates how likely the updated value of the first object attribute value is to match an actual value of the first object attribute value.
26. The security system according to any of clauses 21-25, wherein the security data includes at least one of video data, audio data, biometric data, or user credentials.
27. The security system according to any of clauses 21-26, wherein responsive to determining a negative permission for the first object to exist in the first space, the computing system is adapted to perform one or more responsive actions; wherein performance of the one or more responsive actions restricts the first object from entering a second space in the plurality of spaces.
28. According to some embodiments, a security system managing access to a site that includes a plurality of spaces comprising at least one security device adapted to generate security data associated with a first space included in the plurality of spaces and a computing system including one or more processors in electronic communication with the at least one security device via a network. The computing system adapted to obtain an augmented topology map of the site, the augmented topology map comprising a data structure that defines the plurality of spaces in the site; the computing system adapted to implement a security model comprising a data structure that defines space attribute values assigned to each space in the plurality of spaces, a plurality of objects existing within the plurality of spaces, and object attribute values assigned to each object included in the plurality of objects; the computing system adapted to receive the security data from the at least one security device, the security data indicative of a first object included in the plurality of objects existing in a first space included in the plurality of spaces; the computing system adapted to update, based on the security data, at least one of a first object attribute value associated with the first object and a first space attribute value associated with the first space; the computing system adapted to determine a confidence score for the first object attribute value based in part on the security data security model; the computing system adapted to determine whether the confidence score in compliance with a first policy; the computing system adapted to determine whether the first object attribute value is in compliance with a second policy associated with the first space; and responsive in part to determining that at least one of the confidence score is not in compliance with the first policy or that the first object attribute value is not in compliance with the second policy associated with the first space, the computing system adapted to determine a negative permission for the first object to exist in the first space and issue an alert to an operator.
29. The security system according to clause 28, further comprising a second security device adapted to generate second security data associated with a second space included in the plurality of spaces; the second security device adapted to detect, based on the second security data, an attempt by the first object to enter the second space; the second security device adapted to update a second object attribute value assigned to the first object based on the attempt; and the second security device adapted to transmit the second object attribute value to the computing system.
30. The security system according to clause 28 or clause 29, wherein the computing system is adapted to adapt the confidence score for the first object attribute value based in part on the second object attribute value.
31. The security system according to any of clauses 28-30, wherein the computing system is adapted to decrease the confidence score for the first object attribute value after a predetermined amount of time elapses during which the first object is not detected by a security device.
32. According to some embodiments, a security system managing access to a site comprising a computing system adapted to obtain an indication of a presence of an object within a first space of a plurality of spaces being monitored, the plurality of spaces defined within an augmented topology map of the site, each space in the plurality of spaces having respective space attribute values; the computing system adapted to determine an identity of the object based on at least one object attribute value associated with the object, the identity associated with a confidence score indicative of a degree of certainty that the identity of the object correctly corresponds to the object; the computing system adapted to obtain security data from one or more sensors monitoring the site, the security data indicative of a change to the at least one object attribute value associated with the object; the computing system adapted to update the confidence score for the identity of the object based on the change to the at least one object attribute value; and in response to receipt of a request for the object to transit from the first space to a second space of the plurality of spaces, the computing system adapted to selectively actuate an access control device mediating transit from the first space to the second space based on whether the confidence score is in compliance with a policy in effect at the site.
33. The security system according to clause 32, wherein the policy defines a confidence score threshold; and wherein the confidence score is in compliance with the policy when the confidence score exceeds the confidence score threshold.
34. The security system according to clause 32 or clause 33, wherein the policy specifies a minimum difference between a first likelihood of the object having a first candidate identity and a second likelihood of the object having a second candidate identity.
35. The security system according to any of clauses 32-34, wherein the confidence score is determined based on a function of a time at which the confidence score was last determined and a value of the confidence score determined at that time.
36. The security system according to any of clauses 32-35, wherein the confidence score includes a confidence value and a timestamp at which the confidence value was determined.
37. The security system according to any of clauses 32-36, wherein the confidence score is a statistical model representing a probability distribution of potential candidates for the identity.
38. The security system according to any of clauses 32-37, wherein the change to the at least one object attribute value includes one or more of a change to an existing attribute value, a determination of an attribute value for a new attribute associated with the object, or a determination of a new value for an existing attribute associated with the object.
39. The security system according to any of clauses 32-38, wherein the at least one object attribute value can be formatted as an integer, a vector, a matrix, or a data pair that includes multi-dimensional data.
40. The security system according to any of clauses 32-39, wherein the computing system is adapted to disengage the access control device in response to determining that the confidence score exceeds the predetermined threshold.
41. The security system according to any of clauses 32-40, wherein the access control device is adapted to display a visual effect to indicate that the object was granted access to the second space.
42. The security system according to any of clauses 32-41, wherein the computing system is adapted to engage the access control device or to maintain the access control device in an engaged state in response to determining that the confidence score does not exceed the predetermined threshold.
43. The security system according to any of clauses 32-42, wherein the access control device is adapted to display a visual effect to indicate that the object was not granted access to the second space.
44. The security system according to any of clauses 32-43, wherein the computing system is adapted to obtain access control information in response to determining that the confidence score does not exceed the predetermined threshold, the access control information comprising additional security data obtained from the one or more sensors.
45. The security system according to any of clauses 32-44, wherein the computing system is adapted to cause a particular sensor of the one or more sensors to prompt the object to perform an access control validation to provide the access control information.
46. The security system according to any of clauses 32-45, wherein the computing system is adapted to cause the particular sensor to prompt the object to perform the access control validation prior to the object arriving at a transition point between the first space and the second space at which the particular sensor is located.
47. The security system according to any of clauses 32-46, wherein the computing system is adapted to cause the particular sensor to prompt the object to perform the access control validation by causing the particular sensor to produce at least one of an auditory signal, a visual signal, and a tactile signal.
48. The security system according to any of clauses 32-47, wherein the computing system is adapted to obtain the access control information from at least one of a video camera, a motion sensor, a badge scanner, and a microphone.
49. The security system according to any of clauses 32-48, wherein the computing system is adapted to selectively actuate the access control device based on a correspondence of the at least one object attribute value associated with the object and the space attribute values associated with the second space.
50. The security system according to any of clauses 32-49, wherein, in response to receipt of a request for the object to transit from the first space to a third space of the plurality of spaces, the computing system is adapted to selectively actuate a separate access control device mediating transit from the first space to the third space based on an evaluation of the confidence score with respect to a second policy different than the policy, wherein the second policy is associated with space attribute values associated with the third space.
51. The security system according to any of clauses 32-50, wherein the computing system is adapted to determine a permission of the first object to exist in the first space based on a correspondence of the at least one object attribute values and first attribute values associated with the first space.
52. The security system according to any of clauses 32-51, wherein the computing system is adapted to decrease the confidence score over time.
53. The security system according to any of clauses 32-52, wherein the computing system is adapted to decrease the confidence score when a first candidate identity has a first percentage chance of actually being the identity of the object and a second candidate identity has a second percentage chance of actually being the identity of the object, and a difference between the first percentage chance and the second percentage chance is less than a threshold.

Any and all combinations of any of the claim elements recited in any of the claims and/or any elements described in this application, in any fashion, fall within the contemplated scope of the present disclosure and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the present teachings have been described above in terms of specific embodiments, it is to be understood that they are not limited to these disclosed embodiments. Many modifications and other embodiments will come to mind to those skilled in the art to which this pertains, and which are intended to be and are covered by both this disclosure and the appended claims. It is intended that the scope of the present teachings should be determined by proper interpretation and construction of the appended claims and their legal equivalents, as understood by those of skill in the art relying upon the disclosure in this specification and the attached drawings.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A security system managing access to a site, comprising:
a computing system adapted to obtain an augmented topology map of the site, the augmented topology map defining a plurality of spaces included in the site;
the computing system adapted to identify respective space attribute values for each space included in the plurality of spaces;
the computing system adapted to receive a request for an object to access a first space included in the plurality of spaces;
the computing system adapted to determine a route from a starting location of the object to the first space based in part on the respective space attribute values identified for each space included in the plurality of spaces and an identity of the object, the route including at least one monitoring device disposed between the starting location and the first space; and
the computing system adapted to permit the object to traverse the route monitored by the at least one monitoring device based in part on the identity of the object.

2. The security system of claim 1, wherein to determine the route, the computing system is adapted to identify at least one second space in the plurality of spaces through which the object is permitted to transit; and
the computing system adapted to add the at least one second space to the route.

3. The security system of claim 2, wherein the identity of the object comprises one or more object attribute values that define the object; and
to identify the at least one second space in the plurality of spaces through which the object is permitted to transit, the computing system is adapted to compare the object attribute values to the respective space attribute values identified for each space included in the plurality of spaces; and
the computing system adapted to determine, based on the comparison of the object attribute values to the respective space attribute values, that transiting through the at least one second space is in compliance with one or more active policies associated with the site.

4. The security system of any one of claims 1 to 3, wherein to determine the route, the computing system is adapted to identify at least one third space in the plurality of spaces through which the object is not permitted to transit; and
the computing system adapted to determine not to add the at least one third space the route.

5. The security system of claim 4, wherein the identity of the object comprises one or more object attribute values that define the object; and
to identify the at least one third space in the plurality of spaces through which the object is not permitted to transit, the computing system is adapted to compare the object attribute values to the respective space attribute values identified for each space included in the plurality of spaces; and
the computing system adapted to determine, based on the comparison of the object attribute values to the respective space attribute values, that transiting through the at least one second space is not in compliance with one or more active policies associated with the site.

6. The security system of any one of claims 1 to 5, wherein to permit the object to traverse the route, the computing system is adapted to push configuration parameters to one or more access control devices included in the security system; and
wherein at least one access control device included in the one or more access control devices is disposed on the route and adapted to permit the object to transit past the at least one access control device based in part on the configuration parameters.

7. The security system of any one of claims 1 to 6, wherein to permit the object to traverse the route, the computing system is adapted to unlock an access control device that is disposed along the route;
wherein the access control device includes an electronic door lock included in the security system;
wherein the computing system is adapted to display, via a display device, the route on the augmented topology map; and
wherein the computing system is adapted to store, via a database, the route in association with the identity of the object.

8. The security system of any one of claims 1 to 7, wherein to determine the route from the starting location to the first space, the computing system is adapted to identify a plurality of routes through the site between the starting location of the object and the first space, the plurality of routes including the route;
wherein a second route included in the plurality of routes comprises passage through a second space;
wherein the identity of the object comprises one or more object attribute values that define the object that are not in compliance with one or more active policies associated with the second space; and
wherein the computing system is adapted to select the route instead of the second route based in part on the one or more active policies associated with the second space.

9. A method comprising:
obtaining an augmented topology map of a site, the augmented topology map defining a plurality of spaces in the site;
identifying respective space attribute values for each space included in the plurality of spaces;
receiving a request for an object to access a first space included in the plurality of spaces;
determining a route from a starting location of the object to the first space based in part on the respective space attribute values identified for each space included in the plurality of spaces and an identity of the object, the route including at least one security device disposed between the starting location and the first space; and
permitting the object to traverse the route monitored by the at least one security device based in part on the identity of the object.

10. A security system managing access to a site that includes a plurality of spaces, comprising:
at least one security device adapted to generate security data associated with a first space included in the plurality of spaces;
a computing system including one or more processors in electronic communication with the at least one security device via a network;
the computing system adapted to obtain an augmented topology map of the site, the augmented topology map comprising a data structure that defines the plurality of spaces in the site;
the computing system adapted to implement a security model associated with the site, the security model comprising a data structure that defines space attribute values associated with each space in the plurality of spaces, a plurality of objects existing within the plurality of spaces, and object attribute values assigned to each object included in the plurality of objects;
the computing system adapted to receive the security data from the at least one security device, the security data indicative of a first object included in the plurality of objects existing in the first space included in the plurality of spaces;
the computing system adapted to update, based on the security data, at least one of a first object attribute value associated with the first object and a first space attribute value associated with the first space;
the computing system adapted to determine, based in part on the at least one of the first object attribute value and the first space attribute value, a permission of the first object to exist in the first space; and
responsive to determining a negative permission for the first object to exist in the first space, the computing system adapted to update an attribute value associated with the first object to indicate an anomalous presence of the first object.

11. The security system of claim 10, wherein the at least one security device is adapted to generate second security data associated with a second object included in the plurality of objects, the second object existing in the first space;
the at least one security device adapted to update, based in part on the second security data, at least one object attribute value assigned to the second object;
the at least one security device adapted to transmit, to the computing system, the at least one object attribute value assigned to the second object; and
the computing system adapted to update the security model based on the at least one object attribute value assigned to the second object.

12. The security system of claim 10 or 11, wherein the computing system is adapted to determine a confidence score for an identity of the first object based in part on the first object attribute value and at least one additional object attribute value associated with the first object;
wherein the confidence score for the first object indicates how likely a detected identity of the first object matches an actual identity of the first object;
wherein an actual identity of the first object comprises a plurality of object attribute values that define the first object.

13. The security system of any one of claims 10 to 12, wherein the computing system is adapted to determine an updated confidence score for the updated value of the first object attribute value detected in the security data; and
wherein the updated confidence score indicates how likely the updated value of the first object attribute value is to match an actual value of the first object attribute value.

14. The security system of any one of claims 10 to 13, wherein the security
data includes
at least one of video data, audio data, biometric data, or user credentials.

15. The security system of any one of claims 10 to 14, wherein responsive to determining a negative permission for the first object to exist in the first space, the computing system is adapted to perform one or more responsive actions;
wherein performance of the one or more responsive actions restricts the first object from entering a second space in the plurality of spaces.
